# EUROPEAN PATENT SPECIFICATION

(11) **EP 3 253 203 B1**
(45) Date of publication and mention of the grant of the patent: **28.10.2020**
(21) Application number: 16702547.7
(22) Date of filing: 02.02.2016
(51) Int. Cl.: A01N 25/22, A01N 25/24, A01N 25/34, A01N 31/02, A01N 61/02, A01P 7/02, A01P 19/00

(54) **METHOD AND DEVICE TO TRAP ACARIDS**
VERFAHREN UND VORRICHTUNG ZUM FANGEN VON AKKARIDEN
PROCÉDÉ ET DISPOSITIF PERMETTANT DE PIÉGER DES ACARIENS

(30) Priority: 03.02.2015 EP 15153723
(43) Date of publication of application: 13.12.2017
(73) Proprietor: Domobios, 1200 Woluwe-Saint-Lambert (BE)
(72) Inventor: MAILLEUX, Anne-Catherine, 1332 Genval (BE)
(74) Representative: Office Kirkpatrick
(86) International application number: PCT/EP2016/052129
(87) International publication number: WO 2016/124566

(56) References cited:
- WO-A1-2011/032892
- WO-A2-00/21364
- US-A- 5 230 894
- D Ben-Yakir ET AL: "ENTOMOLOGY ABSTRACTS OF PRESENTATIONS AT A: INTEGRATED PEST MANAGEMENT Temporal and Spatial Distribution of Thrips in Israel", , 17 March 2005 (2005-03-17), XP055179941, Retrieved from the Internet: URL:http://link.springer.com/content/pdf/1 0.1007/BF02981025.pdf [retrieved on 2015-03-27]
- Maria Lis-Balchin: "Lavender. The genus Lavandula", , 1 January 2002 (2002-01-01), XP055179918, London and New York Retrieved from the Internet: URL:http://jhqedu.com:1042/upload/books/Bo ok1010/20140312120332917.pdf#page=266 [retrieved on 2015-03-27]
- Samira Sadek Garboui: "ACTA UNIVERSITATIS UPSALIENSIS UPPSALA 2008 Plant-Derived Chemicals as Tick Repellents", Science and Technology, 1 January 2008 (2008-01-01), XP055179942, Retrieved from the Internet: URL:http://www.diva-portal.org/smash/get/d iva2:172830/FULLTEXT01.pdf [retrieved on 2015-03-27]
- Akademischer Grad: "I DIPLOMARBEIT Titel der Diplomarbeit Essential Oil Components and Volatile Organic Compounds as Pheromones", , 1 May 2010 (2010-05-01), XP055180356, Retrieved from the Internet: URL:http://othes.univie.ac.at/10092/1/2010 -06-01_0500699.pdf [retrieved on 2015-03-31]
- IOBC Working Group Integrated Plant protection in Fruit Crops p: "7th Workshop on Integrated Soft Fruit Production", , 20 September 2010 (2010-09-20), XP055180351, Retrieved from the Internet: URL:http://www.iobc-wprs.org/events/201009 20_IOBC_soft_fruits_2010_book_of_abstracts .pdf [retrieved on 2015-03-31]
- PERRUCCI, S.; CIONI, P.L., FLAMINI, G. ET AL.: "Acaricidal agents of natural origin against psoroptes Cuniculi", PARASITOLOGIA, vol. 36, 1944, pages 260-271, XP009183473,
- PERRUCCI, G. MACCHIONI ET AL.: "The activity of volatile compounds from Lavandula angustifolia against Psoroptes cuniculi", PHYTOTHERAPY RESEARCH, vol. 10, 1996, pages 5-8, XP009183470,
- BARBARA CONTI ET AL: "Essential oil composition and larvicidal activity of six Mediterranean aromatic plants against the mosquito Aedes albopictus (Diptera: Culicidae)", PARASITOLOGY RESEARCH, vol. 107, no. 6, 10 August 2010 (2010-08-10), pages 1455-1461, XP055179923, ISSN: 0932-0113, DOI: 10.1007/s00436-010-2018-4
- ANNA GLISZCZYSKA ET AL: "Chemomicrobial synthesis of ()- and ()-lavandulol", TETRAHEDRON LETTERS, PERGAMON, GB, vol. 52, no. 34, 17 June 2011 (2011-06-17) , pages 4461-4463, XP028244276, ISSN: 0040-4039, DOI: 10.1016/J.TETLET.2011.06.072 [retrieved on 2011-06-25]
- PERRUCCI, STEFANIA: "Acaricidal activity of some essential oils and their constituents against Tyrophagus longior, a mite of stored food", JOURNAL OF FOOD PROTECTION , 58(5), 560-3 CODEN: JFPRDR; ISSN: 0362-028X, 1995, XP009183469,
- Annecatherine Mailleux: "House Dust Mites Avoidance and Allergic Children", Journal of Allergy & Therapy, vol. 05, no. 05, 1 January 2014 (2014-01-01), XP055674392, DOI: 10.4172/2155-6121.1000191

## Description

### FIELD OF INVENTION

The present invention relates to a method and a device for trapping acarids, such as dust mites. The invention in particular relates to the use of a composition for attracting mites and their applications.

### BACKGROUND OF INVENTION

Acarids are a taxon of arachnids that contains mites and ticks. In particular dust mites are widespread worldwide in the houses. They reproduce very prolifically and can produce important amount of allergens contained in their excrements. Therefore dust mites cause allergic symptoms for humans (for a review on dust mites, see Colloff, 2009), such as, for instance, itchy watery eyes, atopic dermatitis (eczema), asthma, allergic rhinitis, persistent stuffy nose or ears. Allergies due to dust mites can develop into fatal complaints. House dust mites are more generally responsible of health problems in vertebrates, since they are susceptible to cause allergy in birds (e.g. chickens, ducks or geese), as well as in mammals, such as pets (e.g. dogs or cats), horses, goats or cows. Dust mites are in particular responsible for atopic dermatitis in pets, and more specifically in dogs and cats.

Two species are mainly responsible for many allergies: the European house dust mite (*Dermatophagoides pteronyssinus*) and the American house dust mite (*Dermatophagoides farinae*) are two different species, but are not specifically confined to Europe or North America, they are widespread worldwide.

Mites thrive in the environment provided by beds, covers, blankets, pillows, mattresses, carpets, armchairs, cushions, padded pieces used by human, also in places such as in teddy bears, cushions and blankets for dogs, cats and other pets, dog's and cat's basket, other pet's basket, dog's and cat's houses, and homes in general.

A problem associated with places with living mites, is how to reduce allergic reactions, *i.e.* how to prevent or treat allergic reactions, from which users, humans and pets, may suffer, when coming into contact or in the vicinity of such contaminated places.

Various sanitation methods are available to remove and/or kill acarids, such as dust mites. The most common and simple way of removing acarids consists in vacuuming. This method only removes acarids, but does not kill all of them and is to some extent dependent on the equipment used, and in particular relies on collection bags, which prevent spreading of acarids, and more important acarid derived allergens. Moreover, not all surfaces containing acarids are amenable to being treated in this way.

Another way of dealing with acarid infestations consists in the application of pesticides. While this method effectively kills some of the acarids, and hence prevents their spreading, the use of inherently toxic pesticides in a home environment is often not conceived acceptable. These methods however, merely kill the acarids, but do not remove them or their allergens. Moreover, similar to vacuum cleaning, not all surfaces can be or are acceptable for being treated in this way. Some essential oils like lavender oils have been used to repell of kill acarids, as disclosed on page 2010 of the book "Lavender" by Maria Lis-Bachin (1 January 2002)or by Samira Sadek Garboui in Acta Universitatis Upsaliensis, Uppsala 2008, "Plant Derived Chemicals as Tick repellants" (Science and Technology 1 January 2008). Lavender oil also known from WO00/21364, WO 2011/032892 to have some acaricidal effect as well as from the Diplomarbeit of Marianne Muller dated of May 2010 as containing some components acting as pheromones, like for example lavandulyl-senecioate and lavandulyl- isovalerate (see D Ben-Yakir et al, Entomology abstracts of Presentation at A: Integrated Pest Management, 17 May 2005 or Tetrahedron Letters, vol. 52, 34, 4461-4463). Perruci also demonstrated some acaricidal effect of lavender oil and its mail components (Parasitologia vol 36, 1944, 260-271; Phytotherapy Research, vol 10, 1996, pp5-8 and Journal of Food Protection, 58(5), 560-3).

A common drawback in all conventional acarid sanitation methods to date is accessibility in combination with safety and efficacy. Indeed, for instance mattresses usually have a considerable thickness, such that either vacuuming or the application of pesticides may only result in superficial treatment. As dust mites may reside in the core of the mattress, such superficial treatment often proves not to be very efficacious. In recent years, mite attracting agents have been combined with pesticides to at least partially meet the accessibility requirements (JP2000336007).

In view of the above, there exists a need to improve sanitation and to provide further methods for efficacious removal of acarids, such as dust mites.

In particular, there is a need for methods and products that should be safe for the human health, cost-effective, easily applicable as well as safe for the environment.
Especially, there exists a need to develop methods for specifically eliminating acarids, thereby preventing or reducing allergic reactions. Indeed, even though pest encompasses in general acarids and insects, these two kinds of arthropods are very different. For instance, some pheromones are specific to one group such as mites, but not to insects. As an illustration, a pheromone is used to control varroa, which is a parasitic mites associated with honey bees, by acting on mites without affecting bees.

The Journal of Allergy and Therapy, 2014, 5:5, 191 discloses attracting and trapping house dust mites outside the mattresses to reduce symptoms of allergy in Children. This approach gave good results, and there is a need to further develop this approach.

The present invention therefore relates to the use of compositions and methods for safely and efficiently attracting mites.

### SUMMARY

This invention thus relates to the use of a composition comprising an attracting agent, wherein said attracting agent is lavandulol in a concentration of from 0.0000001% (v/v) to 0.0095% (v/v) for attracting mites.

The invention further relates to the use of a composition further comprising at least one additional attracting agent, wherein said additional attracting agent is a polysorbate in a concentration of from 0.0000001% (v/v) to 0.01% (v/v).

In a particular embodiment, the use of a composition of the invention further comprises at least one solvent, at least one stabilizer, at least one emulsifier, at least one excipient and/or at least one perfume. In a particular embodiment, the at least one perfume for use in the composition of the invention comprises an essential oil of *Mentha citrata, Mentha piperita, Mentha arvensis, Eucalyptol radiata, Vanilla planifolia, Vanilla odorata* or combinations thereof.

The present invention further concerns a method for attracting and holding mites, comprising the steps of:
a) providing a sheet having a thickness of at least 1 mm and having interstices sufficiently large to hold mites, wherein a sheet having interstices sufficiently large to hold mites is defined as a sheet having pore sizes from less than 1 mm up to 5 mm; and
applying on said sheet the composition as defined above or in any one of claims 1 to 5 at a dose ranging from 5 mL/m² to 2000 mL/m².
In a particular embodiment, the method of the invention further comprises the steps of contacting said sheet before step a) or after step b) with an object, wherein a method of treatment of a human or on an animal is not encompassed.
In a particular embodiment, the method of the invention comprises contacting said sheet with an object for up to about 3 hours, preferably for up to about 2 hours, preferably for up to about 2 hours, preferably for up to about 1 hour, preferably for up to about 0.5 hour, after step b).

The present invention further concerns a method for eliminating mites, comprising the steps of:
i) performing the method for attracting and holding acarids according to the invention; and
ii) removing said sheet from said object.

The present invention further concerns a sheet for attracting mites having a thickness of at least 1 mm and having interstices sufficiently large to hold mites, wherein a sheet having interstices sufficiently large to hold mites is defined as a sheet having pore sizes from less than 1 mm up to 5 mm, comprising a composition comprising an attracting agent, wherein said attracting agent is lavandulol in a concentration of from 0.0000001% (v/v) to 0.0095% (v/v) for attracting mites at a dose ranging from 5 mL/m² to 2000 mL/m².

In a particular embodiment, the sheet according to or for use in the invention comprises from 0 to 100% polyester. In another embodiment, the sheet according to or for use in the invention comprises at least 30%, preferably at least 50%, preferably at least 70%, preferably at last 80%, preferably at least 90%, preferably at least 95% wool and/or cotton and more preferably comprises 100% wool or cotton. In another particular embodiment, the sheet according to the invention comprises at least 30% to 100% wool and/or cotton and from 0% to 70% viscose and/or polyester.

The present invention further concerns a kit for attracting mites comprising a composition comprising an attracting agent, wherein said attracting agent is lavandulol in a concentration of from 0.0000001% (v/v) to 0.0095% (v/v) for attracting mites and a sheet having a thickness of at least 1 mm and having interstices sufficiently large to hold mites, wherein a sheet having interstices sufficiently large to hold mites is defined as a sheet having pore sizes from less than 1 mm up to 5 mm.

The present invention further concerns the use of a unit dosage applicator for attracting mites comprising a composition comprising an attracting agent, wherein said attracting agent is lavandulol in a concentration of from 0.0000001% (v/v) to 0.0095% (v/v) for attracting mites, adapted to release an area dose ranging from 5 mL/m² to 2000 mL/m²..

In a particular embodiment, the said mites which are referred to with the composition, method, sheet, kit or unit dosage applicator according to the invention, are selected from the group consisting of *Dermatophagoides pteronyssinus* and *Dermatophagoides farinae.*
In a particular embodiment, the said attracting non-lethal dose per area for use in the method, the sheet or the unit dosage applicator according to the invention is preferably ranging from 10 mL/m² to 1000 mL/m².

The present invention further concerns the use of lavandulol in a concentration of from 0.0000001% (v/v) to 0.0095% (v/v) and/or of at least one polysorbate in a concentration of from 0.0000001% (v/v) to 0.01% (v/v) for attracting mites, wherein said mites are selected from the group consisting of *Dermatophagoides pteronyssinus, Dermatophagoides farinae, Tyrophagus putrescentiae and Acarus Siro* and wherein the polysorbate is one of the list consisting of sorbitan monolaurate, sorbitan monopalmitate, polyethylene glycol sorbitan monostearate, polyoxyethylene 20 sorbitan monooleate, polyoxyethylene 4 sorbitan monostearate, polyoxyethylene 20 sorbitan tristearate, sorbitan tristearate, sorbitan monooleate and polyoxyethylene sorbitan trioleate.

### DEFINITIONS

In the present invention, the following terms have the following meanings:
- the singular forms "**a**", "**an**", and "**the**" as used herein include both singular and plural referents unless the context clearly dictates otherwise.
- the terms "**comprising**", "**comprises**" and "**comprised of"** as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of", as well as the terms "consisting essentially of", "consists essentially" and "consists essentially of".
- the term "**about**" or "**approximately**" as used herein when referring to a measurable value such as a parameter, an amount, a temporal duration, and the like, is meant to encompass variations of +/-20% or less, preferably +/-10% or less, more preferably +/-5% or less, and still more preferably +/-1% or less of and from the specified value, insofar such variations are appropriate to perform in the disclosed invention. It is to be understood that the value to which the modifier "about" or "approximately" refers is itself also specifically, and preferably, disclosed.
- whereas the terms "**one or more**" or "**at least one**", such as one or more or at least one member(s) of a group of members, is clear *per se*, by means of further exemplification, the term encompasses *inter alia* a reference to any one of said members, or to any two or more of said members, such as, e.g., any ≥3, ≥4, ≥5, ≥6 or ≥7 etc. of said members, and up to all said members.
the term "**attracting**" means causing mites to move from a place, where they were living, to another place, where the source of attraction is located. In one embodiment, the source of attraction is an attracting agent.

### DETAILED DESCRIPTION

This invention relates to the use of a composition for attracting mites, comprising lavandulol in a concentration of from 0.0000001% (v/v) to 0.0095% (v/v).

As used herein, the term "**lavandulol**" refers to the monoterpic alcohol 5-Methyl-2-prop-1-en-2-ylhex-4-en-1-ol, also known as 2-isopropenyl-5-methyl-4-hexen-1-ol, having the molecular formula C₁₀H₁₈O (CAS Registry Number: 498-16-8). Lavandulol may be found in a variety of essential oils, such as lavender oil, wherein it is generally present in an amount of about 0.78%. Lavandulol is a chiral molecule, the (*R*)-enantiomer of which has a significant aroma, whereas the (*S*)-enantiomer has only a weak odor. Within the meaning of the present invention, by "lavandulol", it is meant that the composition of the invention may comprise the (*R*)-enantiomer of lavandulol or the (*S*)-enantiomer of lavandulol only, or any mixture of these enantiomers, such as for instance compositions containing a ratio 1/5, 1/3, 1/2, 1/1, 2/1, 3/1 or 5/1 of the (*R*)-enantiomer of lavandulol to the (*S*)-enantiomer of lavandulol respectively.

In a particular embodiment of the invention, lavandulol is obtained from a plant selected in the group consisting of Asparagales, Asterales, Dipsacales, Ericales and Lamiales. Asparagales preferably include Orchidaceae, preferably *Acacallis superba, Aerangis appendiculata, Aerangis biloba, Aerangis brachycarpa, Aerangis confuse, Aerangis distincta, Aerangis fastuosa, Aerangis kirkii, Aerangis kotschyana, Aerangis somalensis, Aeranthes grandiflora, Aerides crassifolia, Aerides fieldingii, Aerides lawrenceae, Ancistrochilus rothschildianus, Angraecopsis amaniensis, Angraecum aporoides, Angraecum bosseri, Angraecum eburneum, Angraecum eichlerianum, Angraecum girymae, Angraecum sesquipedale, Anguloa clowesii, Bollea coelestis, Brassavola digbyana, Brassavola glauca, Brassavola nodosa, Brassavola tuberculata, Brassia lobbii, Brassia verucosa, Catasetum viridiflavum, Cattleya araguaiensis, Cattleya bicolor, Cattleya dowiana, Cattleya labiata, Cattleya lawrenceana, Cattleya leopoldii, Cattleya luteola, Cattleya maxima, Cattleya percivaliana, Cattleya porphyroglossa, Cattleya schilleriana, Caularthron bicornutum, Chondrorhyncha lendyana, Cirrhaea dependens, Cirrhopetalum fascinor, Cirrhopetalum robustum, Cochleanthes aromatica, Cochleanthes discolor, Cochleanthes marginata, Coelogyne zurowetzii, Constantia cipoensis, Coryanthes leucocorys, Coryanthes mastersiana, Coryanthes picturata, Coryanthes vieirae, Cymbidium goeringii, Dendrobium anosmum, Dendrobium antennatum, Dendrobium beckleri, Dendrobium brymerianum, Dendrobium carniferum, Dendrobium chrysotoxum, Dendrobium delacourii, Dendrobium lichenastrum, Dendrobium moniliforme, Dendrobium monophyllum, Dendrobium pugioniforme, Dendrobium trigonopus, Dendrobium unicum, Dendrobium virgineum, Dendrobium williamsonii, Dendrochilum cobbianum, Diaphananthe pellucida, Diaphananthe pulchella, Dichaea rodriguesii, Dracula chestertonii, Dryadella edwallii, Embreea rodigasiana, Encyclia adenocarpa, Encyclia baculus, Encyclia citrina, Encyclia fragrans, Encyclia glumacea, Epidendrum ciliare, Epidendrum lacertinum, Epidendrum nocturnum, Epigeneium lyonii, Eria hyacinthoides, Gongora armeniaca, Gongora cassidea, Gymnadenia conopea, Himantoglossum hircinum, Houlletia odoratissima, Huntleya heteroclita, Huntleya meleagris, Laelia albida, Laelia anceps, Laelia autumnalis, Laelia gouldiana, Laelia perinii, Liparis viridiflora, Lycaste aromatica, Lycaste cruenta, Lycaste locusta, Masdevallia caesia, Masdevallia estradae, Masdevallia glandulosa, Masdevallia laucheana, Masdevallia striatella, Masdevallia tridens, Maxillaria nigrescens, Maxillaria picta, Maxillaria tenuifolia, Maxillaria variabilis, Miltonia regnellii, Miltonia schroederiana, Miltonia spectabilis, Miltoniopsis phalaenopsis, Neofinetia falcata, Nigritella nigra, Odontoglossum cirrhosum, Odontoglossum constrictum, Odontoglossum pendulum, Odontoglossum pulchellum, Oncidium longipes, Oncidium ornithorhynchum, Oncidium sarcodes, Oncidium tigrinum, Peristeria elata, Pescatorea cerina, Pescatorea dayana, Pescatorea lehmannii, Phalaenopsis violacea, Platanthera bifolia, Platanthera chlorantha, Plectrelminthus caudatus, Polystachya campyloglossa, Polystachya cultriformis, Polystachya fallax, Polystachya mazumbaiensis, Rangaeris amaniensis, Rhynchostylis coelestis, Rodriguezia refracta, Stanhopea jenischiana, Stanhopea oculata, Stanhopea tigrina, Trichocentrum tigrinum, Trichoglottis philippinensis, Trixspermum arachnites, Vanda coerulescens, Vanda denisoniana, Vanda tessellata, Zygopetalum crinitum.* Asterales preferably include *Asteraceae,* preferably *Anthemis nobilis, Matricaria recutita, Santolina chamaecyparissus.* Dipsacales preferably include *Valerianaceae,* preferably *Valeriana officinalis.* Ericales preferably include *Lecythidaceae, e.g. Corythophora amapaensis, Couratari stellata, Couroupita guianensis, Eschweilera coriacea, Eschweilera pedicellata, Grias neuberthii, Grias peruviana, Gustavia longifolia, Gustavia serrata, Lecythis confertiflora, Lecythis persistens ssp. aurantiaca, Lecythis pisonis,* as well as *Polemoniaceae,* preferably *Phlox drummondii, Phlox paniculata,* as well as *Sapotaceae,* preferably *Mimusops elengi,* as well as *Theophrastaceae,* preferably *Clavija euerganea, Clavija repanda, Deherainia smaragdina ssp. smaragdina, Jacquinia keyensis, Jacquinia macrocarpa, Jacquinia sprucei, Theophrasta Americana.* Lamiales preferably include *Scrophulariaceae,* preferably *Buddleja davidii.* Malvales preferably include *Thymelaeaceae,* preferably *Daphne mezereum.* In a particular embodiment, lavandulol may also be obtained from a mixture of the above mentioned plants, or from essential oils thereof. In a particular embodiment, lavandulol may also be synthetized chemically according to methods well known to the skilled person in the art.

Another object of the invention is the use of a composition for attracting mites selected from the group consisting of *Dermatophagoides pteronyssinus, Dermatophagoides farinae, Tyrophagus putrescentiae and Acarus Siro,* comprising at least one polysorbate, as defined below, in a concentration of from 0.0000001% (v/v) to 0.01% (v/v).
The claimed use of a composition for attracting mites comprising lavandulol can comprise at least one additional attracting agent, wherein said attracting agent is a polysorbate. The inventors have indeed surprisingly discovered that the combination of these attracting agents results in further enhanced attracting properties of mites.

As used herein, the term "polysorbate" refers to derivatives of PEG-ylated sorbitan esterified with fatty acids, which are well known from the skilled person in the art. In a particular embodiment, the term "**polysorbate**" as used herein include at least one of:
- sorbitan monolaureate, of formula C₅₈H₁₁₃O₂₆ (also known as polysorbate 20 or polyoxyethylene (20) sorbitan monolaurate, and under the common commercial brand names Alkest TW20 or Tween 20, and having the CAS Registry Number 9005-64-5),
- sorbitan monopalmitate, of formula C₆₂H₁₂₃O₂₆ (also known as polysorbate 40 or polyoxyethylene (20) sorbitan monopalmitate, and under the commercial brand names Tween 40, and having the CAS Registry Number 9005-66-7),
- Polyethylene glycol sorbitan monostearate, of formula C₆₄H₁₂₆O₂₆ (also known as Polyoxyethylene sorbitan monostearate, polysorbate 60, polyoxyethylene (20) sorbitan monostearate or Octadecanoic acid [2-[(2*R*,3*S*,4*R*)-3,4-dihydroxy-2-tetrahydrofuranyl]-2-hydroxyethyl] ester, also referred to as food additive E345 by the European Parliament, and known under the commercial brand name Tween 60, and having the CAS Registry Number 9005-67-8),
- Polyoxyethylene (20) sorbitan monooleate of formula C₆₄H₁₂₆O₂₆ (also referred to as food additive E433 by the European Parliament, and known under the commercial brand names Alkest TW80, Canarcel, Poegasorb or Tween 80, and having the CAS Registry Number 9005-65-6),
- sorbitan fatty acid ester ethoxylate of formula C₃₄H₆₆O₁₁ (also known as Polyoxyethylene (4) sorbitan monostearate, and under the commercial brand names emulsifier T-61 or Tween 61, and having the CAS Registry Number 9005-67-8),
- sorbitan fatty acid ester ethoxylate of formula C₁₀₀H₁₉₄O₂₈ (also known as polyoxyethylene (20) sorbitan tristearate and under the commercial brand name Tween 65, and having the CAS Registry Number 9005-71-4),
- sorbitan tristearate, of formula C₆₀H₁₁₄O₈ (also known as polyoxyethylene (20) sorbitan tristearate or Octadecanoic acid [(2*R*,3*S*,4*R*)-2-[1,2-bis(1-oxooctadecoxy)ethyl]-4-hydroxy-3-tetrahydrofuranyl] ester, and under the commercial brand names Span 65, EmulsifierS65, Lonzest STS, Emalex EG-2854-S, Sorbitantristearat, Glycomul TS KFG, and having the CAS Registry Number 26658-19-5),
- sorbitan monooleate, of formula C₂₄H₄₄O₆ (also known as polysorbate 80, polyoxyethylene (20) sorbitan monooleate, and under the commercial brand names armotanpmo-20, atlox1087, atlox8916tf, atolox8916tf, capmul POE-O, crill10, crill11, crillet4, Alkest TW 80 or Tween 80, and having the CAS Registry Number 9005-65-6),
- Polyoxyethylene sorbitan trioleate of formula C₂₄H₄₄O₆ (also known as polyoxyethylene 20 sorbitol trioleate, under the commercial brand names emsorb6903, glycosperse TO-20, liposorb TO-20, protasorb TO-20, sorbimacrogoltrioleate 300 and Tween 85, and having the CAS Registry Number 9005-70-3).
In a particular embodiment of the present invention, the use of a composition for attracting mites may comprise one or more of the above mentioned polysorbates, such as at least one, at least two, at least three, at least four, at least five, at least six, at least seven, at least eight or all.
In a preferred embodiment of the present invention, polysorbate monostearate (Tween 60) is used as polysorbate.

The composition of the disclosure is a composition in which the pure (or substantially pure) active ingredients are diluted, in particular it comprises from 0.0000001% (v/v) to 0.0095% (v/v) of lavendulol. In non claimed embodiments, the composition can comprise from 0.0000001% (v/v) to 10% (v/v), or from 0.000001% (v/v) to 0.1% (v/v), or from 0.00001% (v/v) to 0.01% (v/v) lavendulol, or from 0.000000095% (v/v) to 9.5% (v/v), or from 0.00000095% (v/v) to 0.095% (v/vThe composition of the disclosure comprises preferably from 0.0000095% (v/v) to 0.0095% (v/v), preferably about 0.0000095% (v/v) or about 0.00000475% (v/v), preferably about 0.00005% (v/v) or about 0.0001% (v/v).or about 0.000001% (v/v) lavandulol).
In another particular embodiment, the composition of the disclosure further comprises from 0.0000001% (v/v) to 10% (v/v), preferably from 0.000001% (v/v) to 0.1% (v/v), preferably from 0.00001% (v/v) to 0.01% (v/v), preferably about 0.0001% (v/v) or about 0.00005% (v/v) polysorbate.
The composition of the disclosure for use in the method of the invention can further comprise at least one additional attracting agent, preferably selected in the group consisting of: 1,3-dimethoxybenzene, Undecanal, Dodecan-2-one, Tridecanoic acid, Tridecane, 7-Methyltetradecane, Pentadecane, Heptadecane, Nonadecanoic acid, (E,E)-4,8,12-Trimethyl-1,3,7,11-tridecatetraene, (E)-1,5-Octadien-3-ol, 1-Methylpiperidin-2-one, (1R,3R,5R,7R)-1,3,5,7-Tetramethyldecyl formate, (Z)-1,5-Octadien-3-ol, (Z,Z)-1,6,9-Heptadecatriene, 2,3-Dihydroxybenzaldehyde, 2,6-di-t-Butyl-4-methylphenol, Pentacosane, Heptacosane, Nonacosene, 2,6-Dibromophenol, 2,4,6-Trichlorophenol, 2,4-Dichlorophenol, 2,6-Dichlorophenol, 2,6-Dimethyl-(E)-2,6,8-nonatriene, 2-Hydroxy-6-methylbenzaldehyde, 2-Methylpropan-1-ol, 2-Methylbutan-1-ol, 2,6-Dimethyl-2,5-heptadiene-4-one, 2-Methyl acetophenone, 2-Methyl benzaldehyde, 2-Methyl benzoic acid, 2-Methoxy-3-methyl-1,4-benzoquinone, 2-Nitrophenol, (2R,3R)-2,3-Epoxy-3,7-dimethyl-6-octenal, 3,4-Dehydrocineole, 3-Ethyl benzaldehyde, 3-Ethylphenol, 3-Isopropyl-6-methyl benzaldehyde, 3-Methylbutan-1-ol, 3-Methylbenzaldehyde, Propan-1-ol, 3S8S-chrysomelidial, (4aS,7S,7aR)-Tetrahydro-4,7-dimethylcyclopenta[c]pyranone, (4aS,7S,7aS)-Tetrahydro-4,7-dimethylcyclopenta[c]pyranone, Dihydro-5-propylfuran-2(3H)-one, 4-Hydroxy-2-methyl benzaldehyde, (5S,8S)-2-Methyl-5-(1-formylethyl)-1-cyclopentene-1-carbaldehyde, (Z,Z)-5,9-Octadecadienoic acid, Hexanal, 6-Ethyl benzaldehyde, 6-Methyl salicylic acid, Heptan-2-one, Heptanal, 7-Hydroxy-3H-isobenzofuran-1-one, 7-Methyl-5-hydroxy-1,4-naphthoquinone, Octan-2-one, Octanal, Octan-1-ol, Nonan-2-one, Nonanal, acetic acid, 1-Phenylethanone, Adenine, 3-(4-Methyl-3-pentenyl)-2(5H)-furanone, 4-(4-Methyl-3-pentenyl)-2(5H)-furanone, (E)-2-(4-Methyl-3-pentenyl)-butenedial, (E)-2-(2-Hydroxyethylidene)-6-methyl-5-heptena, 2-(4-Methylcyclohex-3-enyl)-propan-2-ol, Ammonia, Eicosanoic acid, aromatic attractants such as oils and fats, their esters with fatty acids, benzaldehyde, (E)-2-(4-Methyl-3-pentenylidene)-butanedial, (E)-2-(2-Hydroxyethyl)-6-methyl-2,5-heptadienal, 1R-(1R,4E,9S)-4,11,11-Trimethyl-8-methylenebicyclo[7.2.0]undec-4-ene, (E,E)-7,11,15-Trimethyl-3-methylene-1,6,10,14-hexadecatetraene, butyric acid and alcohols, C4-12 aliphatic ketones, C4-14 aliphatic lactones, C7-10 linear aliphatic aldehydes, Decanoic acid, Octanoic acid, Cholest-5-en-3beta-ol, (4R,6R,8R)-4,6,8-Trimethyldecan-2-one, (Z)-3,7,11-Trimethyl-1,6,10-dodecatrien-3-ol, (Z,E)-3,7-Dimethyl-2,6-octadienal, Carbon dioxide, (24S)-24-Methylcholesta-5,22(E)-dien-3beta-ol, N,N-Diethyl-3-methylbenzamide, 1-Tridecene, 1-Pentadecene, 1-Heptadecene, 1-Nonadecene, 1-Eicosenal, 1-Octen-3-ol, 4-Heptadecene, 6,9-Heptadecadiene, 8-Heptadecene, 8-Nonen-2-one, 9,17-Octadecadienal, N,N-Diethyl-2,5-dimethylbenzamide, (E,E,E)-3,7,11,15-Tetramethylhexadeca-1,3,6,10,14-pentaene, (E,E)-3,7,11-Trimethyl-2,6,10-dodecatrienal, (E)-4,8-Dimethyl-1,3,7-nonatriene, (E)-9-Octadecenoic acid, (3S,8R)-2-Methyl-5-(1-formylethyl)-1-cyclopentene-1-carbaldehyde, ester-based food aroma additives such as geranyl, esters of aromatic attractants such as oils and fats, Ethanol, Ethyl hexadecanoate, ethyl-Z2E4-decadienoate, formic acid, 3-Hydroxybenzene-1,2-dicarbaldehyde, Dihydro-5-methylfuran-2(3H)-one, (E)-3,7-Dimethyl-2,6-octadienal, (E)-3,7-Dimethyl-2,6-octadien-1-ol, (E)-3,7-Dimethyl-2,6-octadienyl formate, (E,E)-3,7,11,15-Tetramethyl-1,6,10,14-hexadecatetraene-3-ol, guanine, guanine, heptadecadiene, (Z,Z)-Hexyl-9,12-octadecadienoate, Hexyl 2-formyl-3-hydroxybenzoate, hexyl stearate, hypoxanthine, isobutyric acid, (S)-3-Methyl-6-isopropenyl-2-cyclohexen-1-one, 4S -4-Isopropenyl-3-oxo-1-cyclohexene-1-carboxyaldehyde, 1,3,5,7-Tetramethyldecyl formate, Dodecanoic acid, limonene., 2,6-Dimethyl-2,7-octadien-6-ol, (Z,Z)-9,12-Octadecadienoic acid, (Z,Z,Z)-9,12,15-Octadecatrienoic acid, Heptadecanoic acid, Methyl 2-methoxybenzoate, Methyl 3-chloro-4-methoxybenzoate, methyl heptadecanoate , (Z,Z)-9,12-Octadecadienoic acid methyl ester, (Z,Z,Z)-9,12,15-Octadecatrienoic acid methyl ester, Methyl octadecanoate, (Z)-9-Octadecenoic acid methyl ester, Methyl hexadecanoate, Methyl (Z)-9-hexadecenoate, methyl salicylate, Octadecanoic acid methyl ester, methyl tetradecanoate, (E)-Methyl 2-methylbutenoate, Tetradecanoic acid, neral, (Z)-3,7-Dimethyl-2,6-octadien-1-ol, (Z)-3,7-Dimethyl-2,6-octadienyl formate, 2-Bromophenol, 2-Chlorophenol, octadecenoic acid, C4-18 fatty acid and esters of these fatty acids, (Z)-9-Octadecenoic acid, Olein, Hexadecanoic acid, 4-Methylphenol, Nonanoic acid, pentadecanoic acid, 3-(4-Methyl-3-pentenyl)-furan, phenol, (Z,Z,Z)-5,9,12-Octadecatrienoic acid, 5-Hydroxy-2-methyl-1,4-naphthoquinone, (R)-2,6-Dimethyl-5-heptenal, (R)-2,6-Dimethyl-5-hepten-1-ol, 2-Formyl-3-hydroxybenzyl formate, 3-oxo-4-Isopropylidene-1-cyclohexene-1-carboxyaldehyde, 3-Methyl-2-(3-methylbut-2-enyl)-furan, (S,S)-2,4-Dimethylhexan-1-ol, (S,S)-2,4-Dimethylheptan-1-ol, (S)-2-Methylpentan-1-o, salicylaldehyde, 4S-4-Isopropenyl-3-oxo-1-cyclohexene-1-carboxyaldehyde, (6E,10E,14E,18E)-2,6,10,15,19,23-Hexamethyl-2,6,10,14,18,22-tetracosahexaene, Octadecanoic acid, (E)-3,7-Dimethyl-1,3,6-octatriene, xanthine, (Z,E)-3,7,11-Trimethyl-2,6,10-dodecatrienal, (Z,Z)-4,8-Heptadecadiene, (Z,Z,Z)-4,8,11-Heptadecatriene, (Z)-5-Tridecene, (Z)-6-Tetradecene, (Z)-6-Pentadecene, (Z,Z)-6,9-Heptadecadiene, (Z)-7-Tetradecene, (Z)-7-Pentadecene, (Z)-7-Heptadecene, (Z)-7-Heptadecene, or mixtures thereof.

In a particular embodiment of the invention, the composition further comprises citral, limonene, pinene, propylene glycol, undecane, decanal, dodecane and/or acetic acid as additional attracting agents.

In one embodiment, the composition of the disclosure does not comprise lavender oil or essential oil of lavender.

As used herein, the term "**citral**" refers to 3,7-dimethyl-2,6-octadienal, also called lemonal (CAS Registry Number: 5392-40-5), and is either of, or a mixture of, a pair of terpenoids with the molecular formula C₁₀H₁₆O. The two compounds are double bond isomers. The E-isomer is known as geranial or citral A. The Z-isomer is known as neral or citral B. Citral as used herein may be neral, geranial or a mixture of both, such as a 50-50 mixture.

As used herein, the term "**limonene**" refers to 1-methyl-4-(1-methylethenyl)-cyclohexene. Limonene is a chiral molecule, and biological sources produce one enantiomer: the principal industrial source, citrus fruit, contains D-limonene ((+)-limonene), which is the (R)-enantiomer (CAS Registry Number: 5989-27-5). Limonene as used herein may be D-limonene as well as the racemic mixture.

As used herein, the term "**pinene**" refers to a is a bicyclic monoterpene chemical compound of formula (1S,5S)-2,6,6-trimethylbicyclo[3.1.1]hept-2-ene. There are two structural isomers of pinene found in nature: α-pinene (CAS Registry Number: 80-56-8) and β-pinene, both of which are chiral. Pinene as used herein may be α-pinene, β-pinene, or a mixture thereof, such as a 50-50 mixture. Preferably, pinene is α-pinene.

As used herein, the term "**propylene glycol**" refers to propane-1,2-diol (also known as 1,2-dihydroxypropane methyl glycol) having the molecular formula C₃H₈O₂- Propylene glycol is a chiral molecule, wherein the (*R*)-enantiomer of which has the CAS Registry Number 4254-14-2, the (*S*)-enantiomer of which has the CAS Registry Number 4254-15-3 and the racemic mixture has the CAS Registry Number 57-55-6.

As used herein, the term "**Undecane**" refers to a compound of molecular formula C₁₁H₂₄, also known as hendecane and having the CAS Registry Number 1120-21-4.

As used herein, the term "**Decanal**" refers to a compound of molecular formula C₁₀H₂₀O, also known as decyl aldehyde or caprinaldehyde, and having the CAS Registry Number 112-31-2.

As used herein, the term **"Dodecane"** refers to a compound of molecular formula C₁₂H₂₆, also known as dihexyl, bihexyl, adakane 12 or duodecane, and having the CAS Registry Number 112-40-3.

As used herein, the term **"Acetic acid"** refers to a compound of molecular formula C₂H₄O₂, also known as ethanoic acid or mehanecafboxlique acid, and having the CAS Registry Number 64-19-7.

The attracting agent, and optionally, the at least one additional attracting agent for use in the invention can be solubilized in a solvent selected in a group comprising non polar solvent (such as pentane), polar aprotic solvent (such as acetone) and polar protic solvents (such as formic acid, acetic acid, water, butanol...).

The composition for attracting mites according to the present disclosure can further comprise at least one stabilizer selected in the group consisting of antioxydants, such as gluthatione, vitamin C, vitamin A and/or vitamin E; and sequestrants, such as calcium disodium ethylene diamine tetra-acetate (E385), glucono delta-lactone (E575), sodium gluconate (E576), potassium gluconate (E577), sodium tripolyphosphate, and/or sodium hexametaphosphate (E452i).

The composition for attracting mites according to the present disclosure can further comprises at least one emulsifier, such as anionic surfactants containing anionic functional groups (such as sulfate, sulfonate, phosphate, and carboxylates). Surfactants for use in the present invention with prominent alkyl sulfates include ammonium lauryl sulfate, sodium lauryl sulfate (also known as sodium dodecyl sulfate or SDS), the related alkyl-ether sulfates sodium laureth sulfate (also known as sodium lauryl ether sulfate (SLES)), sodium myreth sulfate, docusate (also known as dioctyl sodium sulfosuccinate), perfluorooctanesulfonate (PFOS), perfluorobutanesulfonate, and linear alkylbenzene sulfonates (LABs) (including alkyl-aryl ether phosphates and alkyl ether phosphate). Other emulsifiers for use in the composition of the invention further comprise carboxylates, such as alkyl carboxylates (e.g. sodium stearate), sodium lauroyl sarcosinate or carboxylate-based fluorosurfactants such as perfluorononanoate, perfluorooctanoate (PFOA or PFO).

The composition for attracting mites according to the present disclosure can further comprise at least one non-ionic surfactant as emulsifier. Such non-ionic surfactants include polyoxyethylene glycol alkyl ethers, polyoxypropylene glycol alkyl ethers, polyoxyethylene glycol octylphenol ethers, polyoxyethylene glycol alkylphenol ethers, glycerol alkyl esters, polyoxyethylene glycol, cocamide MEA, cocamide DEA, Dodecyldimethylamine oxide, and block copolymers of polyethylene glycol and polypropylene glycol (e.g. poloxamers or polyethoxylated tallow amine (POEA)).
In a particular embodiment, the composition of the disclosure further comprises at least one perfume such as an essential oil of *Mentha citrata, Mentha piperita, Mentha arvensis, Eucalyptol radiata, Vanilla planifolia, Vanilla odorata,* or combinations thereof.
Preferably, the composition of the invention does not comprise (cis)-1-methyl-2-(1-methylethenyl)cyclobutaneethanol, (Z)-2-(3,3-dimethylcyclohexylidene)ethanol, (Z)-2-(3,3-dimethylcyclohexylidene)acetaldehyde, or (E)-2-(3,3-dimethylcyclohexylidene)acetaldehyde. In another embodiment, the composition of the invention does not comprise 2-phenylethanol, (E)-anethol, 1-phenethyl alcohol, or 3-methyl eugenol. In another embodiment, the composition of the disclosure does not comprise linalool or linalyl acetate.
Preferably, the composition of the disclosure does not comprise bacteria, bacterial toxins, fungi, plant derivatives or mineral derivatives.
Preferably, the attracting composition of the disclosure is an aqueous composition. In another embodiment, the composition of the invention is an emulsion. Preferably, the composition does not contain toxic substances, such as pesticides or acaricides, or at least does not contain such components in amount sufficient to kill acarids.

As used herein, the term "**acarids**", as used herein, refers to a subclass of arachnids that contains mites and ticks, and is also called Acari (or Acarina). In a particular embodiment, the acarids concerned by the invention are mites. Acarids can belong to the order of Acariformes or to the family of Pyroglyphidaeor to the genus Dermatophagoides. In a particular embodiment, the mites are dust mites or house dust mites. In a particular embodiment, the acarids are stored food mites. Acarids can include : *Acarus immobilis Griffiths, Acarus siro Linnaeus, Aeroglyphus robustus Banks, Aleuroglyphus ovatus Troupeau, Amblyomma americanum Linnaeus, Amblyomma cajennense Fabricius, Amblyomma hebraeum Koch, Amblyomma incisum Neumann, Amblyomma maculatum Koch, Amblyomma parvum Aragão, Amblyomma variegatum Fabricius, Amblyseius potentillae Garman, Anocentor nitens Neumann, Archegozetes longisetosus Aoki, Argas persicus Oken, Argas polonicus Latreille, Argas reflexus Latreille, Austrotritia dentate Aoki, Austrotritia ishigakiensis Aoki, Boophilus microplus Canestrini, Carpoglyphus lactis Linnaeus, Chelacaropsis moorei, Cheyletus malaccesis, Chortoglyphus arcuatus Troupeau, Collohmannia gigantea Sellnick, Cosmoglyphus hughesi Samsinak, Dermacentor albipictus Packard, Dermacentor andersoni Stiles, Dermacentor variabilis Say, Dermanyssus gallinae DeGeer, Dermatophagoides farinae Hughes, Dermatophagoides pteronyssinus Trouessart, Gehypochthonius urticinus Berlese, Glycyphagus domesticus DeGeer, HaemaphySaliS leachi Audouin, HaemaphySaliS leporispalustris Packard, HaemaphySaliS longicornis Neumann, Hermannia convexa C.L. Koch, Histiogaster rotundus Woodring, Histiogaster sp*, *Histiostoma laboratorium Hughes, Hyalomma anatolicum excavatum Koch, Hyalomma dromedarii Koch, Hyalomma marginatum rufipes Koch, Hyalomma truncatum Koch, Hydronothrus crispus Aoki, Ixodes dammini Say, Ixodes persulcatus Schulze, Ixodes ricinus Linn, Ixodes scapularis Say, Ixodes uriae White, Lardoglyphus konoi Sasa & Asanuma, Limnozetes ciliatus Schrank, Mesotritia okuyamai Aoki, Nehypochthonius porosus Norton & Metz, Neoseiulus womersleyi Shicha, Nothrus palustris Koch, Oribotritia banksi Oudemans, Oribotritia berlesei Michael, Oribotritia chichijimensis Aoki, Oribotritia hermanni Grandjean, Oribotritia storkani Feider & Suciu, Ornithodoros erraticus Walton, Ornithodoros moubata Murray, Ornithodoros porcinus porcinus Walton, Ornithodoros tartakovskyi Olenev, Ornithodoros turicata Dugès, Ornithonyssus bacotis, Onrithonyssus syylviarums, Oulenzia sp*, *Parhypochthonius aphidinus Berlese, Perlohmannia sp*, *Phytoseiulus persimilis Athias-Henriot, Platynothrus peltifer Koch, Rhipicephalus appendiculatus Neumann, Rhipicephalus compositus Neumann, Rhipicephalus evertsi evertsi Neumann, Rhipicephalus pulchellus Neumann, Rhipicephalus sanguineus Latreille, Rhipicephalus simus Koch, Rhizoglyphus robini Claparede, Rhizoglyphus setosus Manson, Rhizoglyphus sp, Sancassania polyphyllae Zakhvatkin, Sancassania rodriguezi Samsinak, Sancassania shanghaiensis, Sancassania sp*, *Sarcoptes scabiei Linnaeus, Scheloribates sp*, *Schwiebea araujoae Fain, Schwiebea elongata Banks, Schwiebea similis Manson, Suidasia medanensis Oudemans, Tortonia sp*, *Trhypochthoniellus crassus Warburton & Pearce, Trhypochthonius japonicus Aoki, Trhypochthonius silvestris europaeus, Trhypochthonius tectorum Berlese, Tyreophagus sp*, *Tyroborus lini Oudemans, Tyrophagus jacobsoni Oudemans, Tyrophagus longior Gervais, Tyrophagus neiswanderi Johnson & Bruce, Tyrophagus perniciosus Zakhvatkin, Tyrophagus putrescentiae Schrank, Tyrophagus similis Volgin, Uroactinia hirschmanni Hiramatsu, Varroa jacobsoni Oudemans.* In a preferred embodiment, acarids concerned by the invention include the American dust mite and the European dust mite. In a particular embodiment, the mites are thus selected from the group consisting of *Dermatophagoides pteronyssinus* (the European dust mite) and *Dermatophagoides farinae* (the American dust mite). It will be understood that, while the terms European and American generally refer to the geographic origin or prevalence of these mites, the mites preferably concerned by the invention are not geographically restricted, as *Dermatophagoides pteronyssinus* and *Dermatophagoides farinae* are not exclusively confined to Europe or North America.

In a particular embodiment, the acarids are mites selected from the group comprising or consisting of *Dermatophagoides pteronyssinus, Dermatophagoides farinae, Tyrophagus putrescentiae* and *Acarus siro.*

The present invention further concerns a sheet, which is to be put on a surface of an object in which mites live. Before or after placing the sheet on the surface of the object, a composition according to the invention is applied on the sheet, which attracts mites. After applying the impregnated sheet on the surface of the object, mites are attracted by the attracting composition of the invention, migrate into the sheet and are thus effectively eliminated from the object. The sheet, as used herein has interstices and a thickness sufficiently large to hold acarids.The sheet is to an extent porous, such that mites can migrate into the sheet. The skilled person will understand that, according to the type of mites to be trapped, the porosity and thickness of the sheet may be varied accordingly, as sizes of acarids may vary depending on the species. By "having interstices sufficiently large to hold mites", it is meant that the pore sizes of the sheet may be less than 1 mm up to several mm, such as 1 mm, 2 mm, 3 mm, 4 mm, 5 mm or more. The thickness of the sheet may vary accordingly. The thickness of the sheet is preferably at least about 1 mm. In another particular embodiment, the thickness of the sheet is between about 1 mm and 5 mm, such as between 1 mm and 4 mm, or between 1 mm and 3 mm. In a preferred embodiment, the thickness of the sheet is 2 mm or about 2 mm.
In a particular embodiment, the sheet as used herein is a cloth or fabric, preferably a flexible cloth or fabric. In a particular embodiment, the sheet is a non-woven cloth or fabric, such as a flexible non-woven cloth or fabric. In a particular embodiment, the sheet is felt. Felt is well known in the art. By means of further guidance, as used herein, the term "felt" refers to a non-woven cloth or fabric that is produced by matting, condensing and pressing synthetic and/or non-synthetic fibers.
According to the invention, the sheet is completely or partially made from natural materials. In an embodiment, the sheet further comprises synthetic materials, such as polyester and/or viscose for instance. In a particular embodiment, the sheet comprises or consists of wool and/or of cotton. In a particular embodiment, the sheet comprises at least 10% wool (preferably by weight), such as (about) 10, 15, 20, 25, 30, 35, 40, 45, 50, 55, 60, 65, 70, 75, 80, 85, 90, 95, or 100% wool. In a particular embodiment, the sheet comprises at least 10% cotton (preferably by weight), such as (about) 10, 15, 20, 25, 30, 35, 40, 45, 50, 55, 60, 65, 70, 75, 80, 85, 90, 95, or 100% cotton. In a particular embodiment, the sheet comprises about 100 % wool. In a particular embodiment, the sheet comprises about 100% cotton. The wool as described herein may be obtained from any animal producing wool, such as without limitation sheep and certain other animals, including cashmere from goats, mohair from goats, qiviut from muskoxen, vicuña, alpaca, camel from animals in the camel family, and angora from rabbits. The cotton as described herein may be obtained from any plant producing cotton, more particularly from any plant of the genus *Gossypium,* more particularly from plants selected in the group consisting of *Gossypium hirsutum, Gossypium barbadense, Gossypium arboretum* and *Gossypium herbaceum.* In a particular embodiment, a sheet for use in the invention completely or partially made of cotton is advantageous in that it can be more easily washed and dried.
In another particular embodiment, the sheet comprises from 0% to 100% polyester. In another particular embodiment, the sheet comprises from 30% to 100% of wool and/or coton and from 0% to 70% viscose or polyester.

In a particular embodiment, the sheet for use in the present invention has a density between (about) 5 mg/cm² and 70 mg/cm², such as between (about) 10 mg/cm² and 60 mg/cm², more preferably between (about) 15 mg/cm² and 50 mg/cm². In a preferred embodiment, the sheet has a density of 10 mg/cm² or about 20 mg/cm².

In a particular embodiment, the sheet for use in the present invention comprises loops that are capable of facilitating the migration of acarids from the object to the sheet. In a particular embodiment, the said loops have a size ranging from about 1mm to about 5cm, preferably from about 1mm to about 1cm. In a particular embodiment, the loops have a size ranging from about 1mm to about 5mm, and preferably from about 2mm to about 3mm.
In a particular embodiment, the sheet as used herein has a dark color, such as dark blue. Colors can be measured with a variety of techniques known in the art. By means of example, and without limitation, color can be determined based on the parameters brightness, hue and saturation (or chroma). These parameters may individually or collectively be determined according to the CIELCH color scale, wherein L* (lightness, or brightness), C* (chroma or saturation) and h° (hue) are the parameters representing a polar color space. In a particular embodiment, L* is such that it is <50, preferably L*<60, L*<70, L*<80, or L*<90, i.e. the sheet has a dark color. In an embodiment, C* is such that it is >50, preferably C*>60, C*>70, C*>80, or C*>90, i.e. the sheet has an intense color. In another embodiment, h° is such that 180<h°<360, preferably 200<h°<340, 220<h°<320, or 200<h°<300, i.e. the sheet has a blue color.

It will be understood that the parameter ranges or values as defined herein refer to the average parameter range or value of the sheet, such that also non-uniform parameter ranges or values are envisaged. Preferably however, the parameter range or value of the sheet, such as thickness, porosity, density, color, as well as concentration of the compositions etc. is substantially uniform. Preferably, these parameters do not vary more than 25%, preferably no more than 10% from the average values.

In a particular embodiment, the present invention thus further concerns a sheet as defined above, having interstices sufficiently large and a thickness sufficiently large to hold mites, comprising an attracting and non-lethal dose of the composition of the invention. In a particular embodiment, the said sheet does not contain toxic substances, such as pesticides or acaricides, or at least does not contain such components in amounts sufficient to kill acarids.

As used herein, the terms "trap" or "hold" in connection with acarids do not necessarily mean that the acarids are irreversibly trapped. In a particular embodiment, the acarids which are attracted may freely enter and leave the sheet. The attracting composition of the invention applied to the sheet serves the purpose of attracting as well as retaining or holding the acarids in the sheet.

The present invention further concerns a method for attracting and holding mites comprising the step of contacting the above defined sheet with an object containing mites or suspected of containing mites. In a particular embodiment, the sheet is contacted with the said object before or after the application of mite attracting composition of the invention. As used herein, by "objects containing mites or suspected to contain mites", it is meant an object including for instance beds, covers, blankets, pillows, mattresses, carpets, armchairs, cushions, padded pieces used by human, as well as objects such as teddy bears, cushions and blankets for dogs, cats and other pets, dog's and cat's basket, other pet's basket, dog's and cat's houses, and homes in general.

As used herein, the term "contacting" normally includes placing the sheet on top of or below said object. The sheet may also be wrapped around said object. Usually and preferably, the sheet is in direct contact with said object. It will be understood that depending on the shape and size of the object, the sheet may likewise have a different shape or size. One or more sheets may be contacted with an object to be treated.

When the composition of the disclosure is applied to the sheet, the sheet preferably has a relative humidity comprised between about 30% and about 80%, such as between (about) 40-80%, preferably between 50-75% before being placed onto the object containing acarids or suspected of containing acarids. Depending on the quantity of the composition to be applied per area of sheet, which in its turn depends on the concentration of the active ingredients in the composition, the sheet may need to be dried before contacting it with an object to be treated. In a particular embodiment, the drying is performed passively, such as by passive equilibration with ambient humidity conditions. In another embodiment, the drying is performed actively, such as for instance, without limitation, by applying heat to evaporate excessive moist. In a particular embodiment, the concentration of the active ingredients in the composition is also be chosen such that application of the required amount of the composition resulting in the required dose per unit area automatically results in the required relative humidity as well. In one embodiment, the sheet is not dried.

In a particular embodiment, the sheet comprising the mite attracting is contacted with said object for a period ranging from about 0 to about 0.5 hour, for a period ranging from about 0 to about 1 hour, for a period ranging from about 0 to about 1.5 hours, for a period ranging from about 0 to about 2 hours, or for a period ranging from about 0 to about 3 hours or more.
In a preferred embodiment of the invention, the sheet comprising the mite attracting composition of the invention is contacted with said object for up to about 3 hours (i.e. 3 hours or less), preferably for up to about 2 hours (i.e. for 2 hours or less), preferably for up to about 1 hour (i.e. for 1 hour or less), preferably for up to about 0.5 hour (i.e. for 0.5 hour or less).
In another embodiment, the sheet of the invention is contacted with said object for up to 20 minutes (i.e. 20 minutes or less), preferably for up to 15 minutes (i.e. 15 minutes or less), preferably for up to 10 minutes (i.e. 10 minutes or less). In one embodiment, the sheet of the invention is contacted with said object for a period of time between 5 minutes and 20 minutes. In another embodiment, the sheet of the invention is contacted with said object for a period of time between 5 minutes and 15 minutes. In another embodiment, the sheet of the invention is contacted with said object for a period of time between 10 minutes and 20 minutes. In one embodiment, the sheet of the invention is contacted with said object for about 10 minutes. In another embodiment, the sheet of the invention is contacted with said object for about 5 minutes.

In a particular embodiment, the method comprises applying on the sheet an attracting and non-lethal dose of the composition of the invention. By "attracting and non-lethal dose", it is meant that the at least one active ingredient of the composition is applied to the sheet in a concentration per area ranging from 1.82 g/L/m² to 1.82 kg/L/m², preferably 182 g/L/m².

The dose per area as defined above is preferably obtained by applying a composition comprising the active ingredient or active ingredients. The compositions as described herein are preferably aqueous compositions. In an embodiment, the compositions as described herein may be emulsions. Preferably, the compositions as described herein do not contain toxic substances, such as pesticides or acaricides, or at least does not contain such components in amounts sufficient to kill acarids. The skilled person will appreciate that the more dilute a composition is, the more of the composition needs to be applied in order to achieve the target dose per area. By means of example, and without limitation, if a composition comprises 1 mg/L of an attracting agent, and the target dose of said attracting agent per area is 1 mg/m², then 1 L of the composition needs to be applied per m². If on the other hand a composition comprises 10 mg/L of an attracting agent, and the target dose of said attracting agent per area is 1 mg/m², then 100 mL of the composition needs to be applied per m².
The present invention thus further concern a sheet as defined above, comprising an attracting and non-lethal dose of a composition according to the disclosure.
In a particular embodiment, the object containing mites, or suspected of containing mites which is to be contacted, such as covered, with the sheet comprising the mite attracting composition of the invention, may advantageously be dried before contacting with the sheet. As used herein, the term "drying" preferably refers to an equilibration with ambient humidity conditions. The drying step is thus most beneficial to be applied to objects which may be subject to humid conditions. For instance, a mattress which has been slept on may be more humid than ambient conditions due to transpiration of the individual sleeping on it. In a particular embodiment, the object, in particular a mattress, may be dried for several hours. The drying may be performed passively, such as by passive equilibration with ambient humidity conditions. Alternatively, the drying may be performed actively, such as for instance, without limitation, by applying heat to evaporate excessive moist. In an embodiment, the object to be covered with the sheet as described herein may be dried for at least about 1 hour, such as for instance (about) 1, 2, 3, 4, 5, 6, 7, 8, 9, 10 or more hours. In a particular embodiment, the object to be covered with the sheet as described herein may be dried for from about 0 to about 0.5 hour, from about 0 to about 1 hour, from about 0 to about 1.5 hours, from about 0 to about 2 hours, or from about 0 to about 3 hours or more. In a preferred embodiment of the invention, the object to be covered with the sheet as described herein is dried for 3 hours or less, preferably during 2,5 hours or less, preferably during 2 hours or less, preferably during 1,5 hours or less, preferably during 1 hour or less, preferably during 0.5 hour or less. In another embodiment, the object to be covered with the sheet as described herein is not dried.
In order to remove or eliminate the mites, the sheet, after being contacted with the object containing the acarids, is removed from the object. The mites residing in the sheet are thus effectively removed and eliminated from the object. In order to remove the mites from the sheet, the sheet may be washed and/or frozen. Both methods result in killing of the mites.

When the sheet is washed, the mites will also at the same time be removed from the sheet during the washing process. Any conventional washing process may be applied, such as for instance in a washing machine. Detergent may or may not be added during the washing process. Preferably detergent is added, as such aids in killing the acarids. It will be understood that the skilled person may determine the washing conditions according to the composition of the sheet, as for instance certain fabrics do not tolerate washing at high temperatures, while others do not tolerate certain types of detergent.

Freezing the sheet can be performed by subjecting the sheet to temperatures below 0°C, preferably below about -10°C, such as below (about) -15°C or -20°C. In a particular embodiment, the sheet is frozen for at least about 0.50 hour, such as (about) 0.50, 1.00, 1.25, 1.50, 1.75, 2.00, 2.25, 2.50, 2.75, 3.00, or more hours. The skilled person will understand that depending on the size of the sheet, longer periods may apply for the sheet to be completely frozen. After freezing, the sheet may be thawed, after which the dead acarids may be removed for instance mechanically, such as by shaking the sheet. Additionally, the sheet may be washed, as described before.

The present invention further concerns a kit comprising a sheet as described above and/or a composition according to the disclosure. In a particular embodiment, said kit thus comprises a sheet already impregnated with the composition at a dose as described herein. In another embodiment, the sheet is not yet impregnated with the composition according to the disclosure. In a particular embodiment, the composition of the disclosure is additionally provided in the kit. In addition, the kit may comprise instructions for applying the composition onto the sheet and/or instructions for use, such as for applying the sheet on an object containing or suspected of containing acarids. Such instructions may include the dose to be applied, for instance the dose per area, but may also include, in addition or in the alternative guidance regarding the application of the composition, such as for instance guidance relating to the distance from which the composition needs to be sprayed onto the sheet. The instructions may further, or in the alternative comprise information regarding the time the sheet needs to be placed on the object to be treated, the drying time of the object before which the sheet is contacted with the objects, and/or the drying time or required relative humidity of the sheet before contacting it with the object to be treated. The composition according to the disclosure may be provided in a container, for instance a dispenser or an applicator such as a spray. Such dispensers or applicators are well known in the field. In a particular embodiment, the applicator is configured for continuous release of the composition, such that the user can determine the released amount of the composition for instance by continuously spraying during a specific time. In another embodiment, the applicator is a unit dose applicator, such that the released amount of the composition is predetermined, *i.e.* the applicator or dispenser releases a discrete unitary dose per application. In a particular embodiment, the disperser device is a manual atomizer with a spray nozzle control that provides a defined quantity of attracting solution by unit of surface of the fabric. The skilled person will appreciate that when spraying with a dispenser, being it continuous or discrete, the distance between the dispenser and the target area may impact on the size of the area covered. For instance, when the composition exits the nozzle of the dispenser, the spray may widen proportionally with the distance from the nozzle to cover a larger area, when the distance from the target increases, *i.e.* the further the distance between the dispenser and the target area, the larger the target area will become. Hence, in order to achieve a particular dose per target area, the dispenser may need to be positioned at a predetermined distance from the target area, such that, taking into account the widening of the spray (*e.g.* after leaving the nozzle, the spray widens as a cone), and hence diluting over distance the amount of the composition per area, the preset dose per area is met. By means of example, and without limitation, if the dispenser releases a unit dose containing the amount of active ingredient needed to cover 200 cm², then the dispenser needs to be placed at a distance from the target such that 200 cm² is covered.

The dispenser or applicator as described herein may comprise either one or a combination of the active ingredients as described herein, either in diluted or undiluted form. The dispenser is adapted to release a non-lethal dose for acarids of said active ingredients per unit area.
The present invention relates to methods, products, use of compositions and kits for attracting, trapping, removing and/or eliminating mites, in particular in a household setting. The present invention also relates to the use of such methods, products, compositions and kits for attracting, trapping, removing and/or eliminating mites, in particular in a household setting.

### BRIEF DESCRIPTION OF THE DRAWINGS

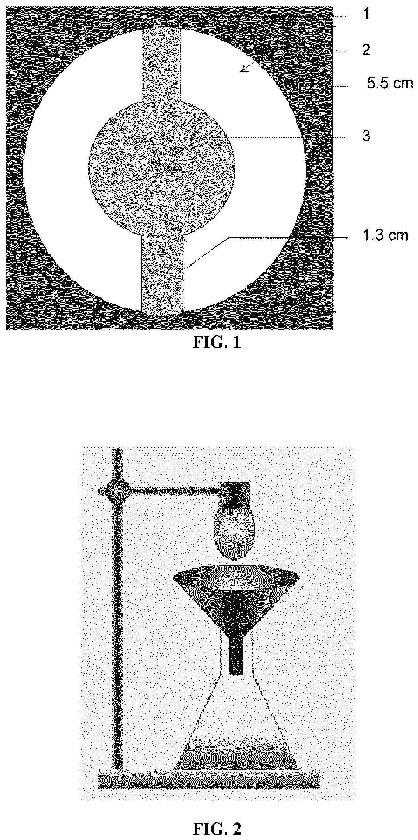

**Figure 1** is a drawing showing an experimental set-up to analyze spontaneous movement of acarids. Number 1 designates the Petri dish. Number 2 designates a half circle. Number 3 represents a group of mites placed in the center of the Petri dish.
**Figure 2** is a drawing/photograph showing a Berlèse funnel. A funnel containing a mattress or a fabric according to the invention containing dust mites in placed under a heat source, such as an electric lamp. Animal escaping the desiccation of the mattress/fabric descend through a filter into a preservative liquid in a receptacle.

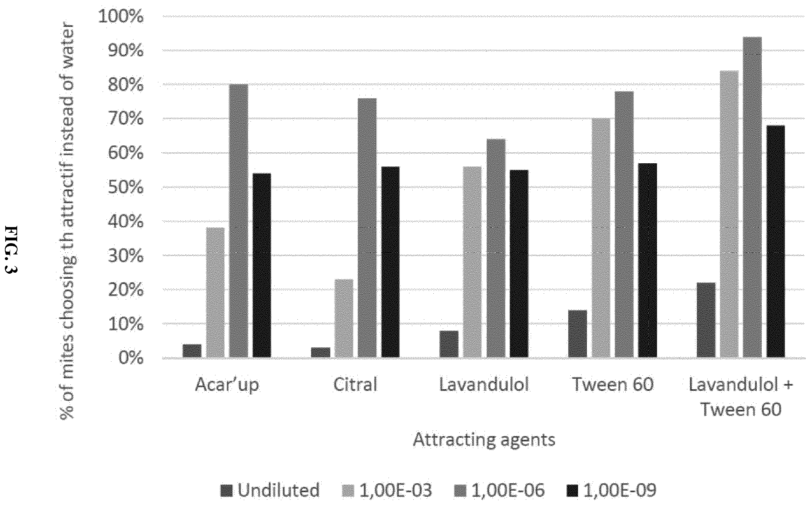

**Figure 3** is a histogram showing the compared efficiencies of various attracting agents, within different dilutions, with respect to *Dermatophagoides pteronyssinus.* The histogram represents the percentage of mites choosing an attracting agent instead of water, as a function of various attracting compositions (comprising one or more attracting agents), within several dilutions (undiluted, 10⁻³, 10⁻⁶ or 10⁻⁹).

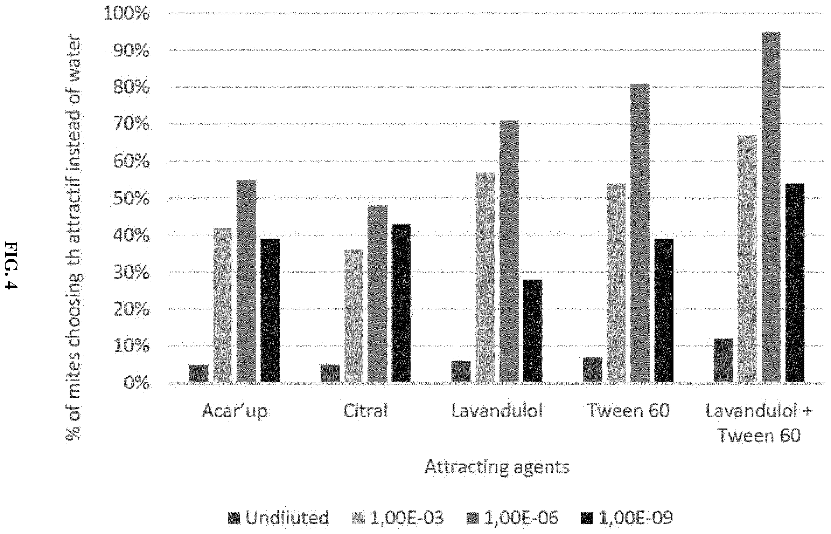

**Figure 4** is a histogram showing the compared efficiencies of various attracting agents, within different dilutions, with respect to *Dermatophagoides farinae.* The histogram represents the percentage of mites choosing an attracting agent instead of water, as a function of various attracting compositions (comprising one or more attracting agents), within several dilutions (undiluted, 10⁻³, 10⁻⁶ or 10⁻⁹).

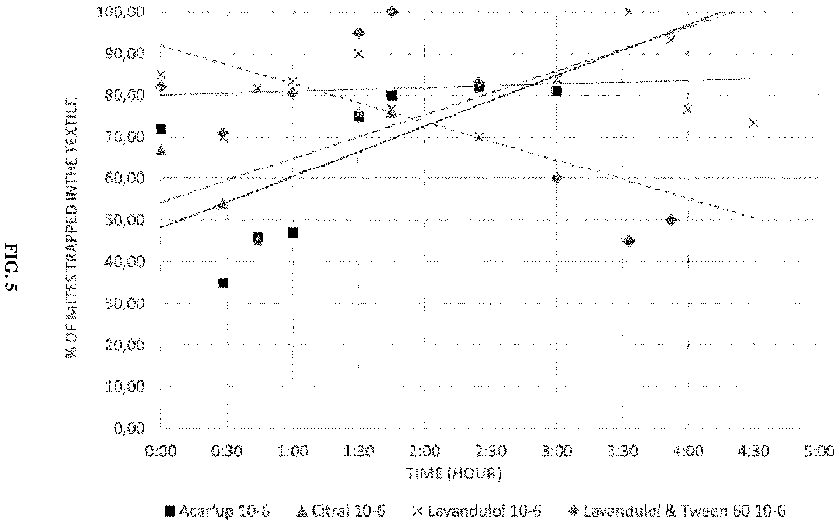

**Figure 5** is a graph representing the effect of drying timing of mattresses containing *Dermatophagoides pteronyssinus* mites on the efficiency of compositions containing one or more attracting agents. The graph represents the percentage of mites trapped by a fabric sprayed with compositions corresponding to the commercial product Acar'up (at a dilution of 10⁻⁶), or with compositions containing citral (at a dilution of 10⁻⁶), lavandulol (at a dilution of 10⁻⁶) and lavandulol and Tween 60 (both at a concentration of 0.5x10⁻⁶), as attracting agents, as a function of the drying time of the mattress.

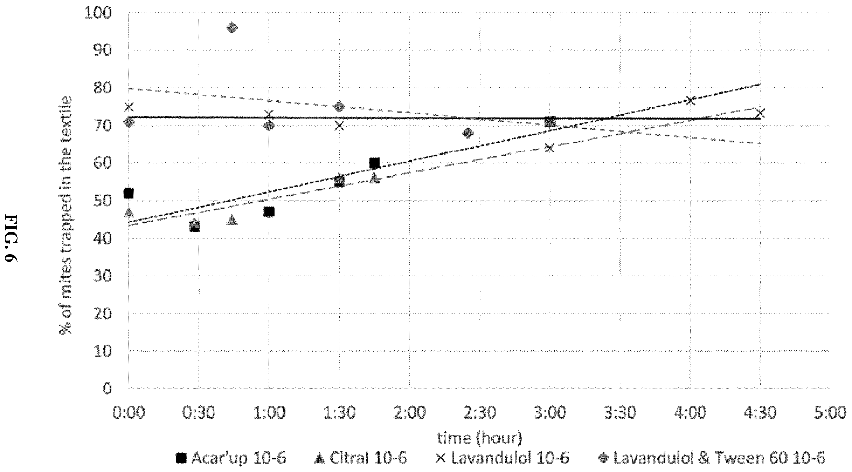

**Figure 6** is a graph representing the effect of drying timing of mattresses containing *Dermatophagoides farinae* mites on the efficiency of compositions containing one or more attracting agents. The graph represents the percentage of mites trapped by a fabric sprayed with compositions corresponding to the commercial product Acar'up (at a dilution of 10⁻⁶), or with compositions containing citral (at a dilution of 10⁻⁶), lavandulol (at a dilution of 10⁻⁶) and lavandulol and Tween 60 (both at a concentration of 0.5x10⁻⁶), as attracting agents, as a function of the drying time of the mattress.

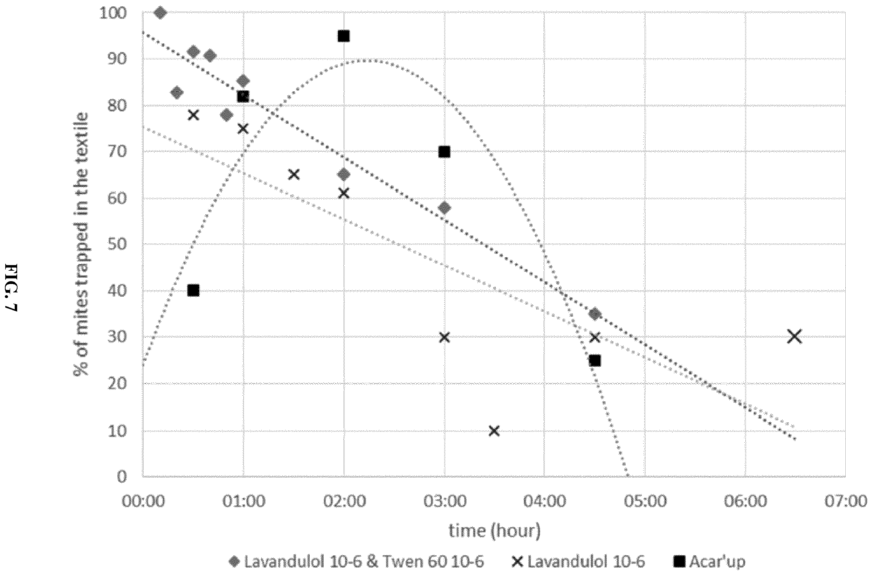

**Figure 7** is a graph representing the attracting efficiency of various compositions containing one or more attracting agents, as a function of time of application of the sheet on an object containing *Dermatophagoides pteronyssinus* mites. The graph represents the percentage of mites trapped by a fabric sprayed with compositions corresponding to the commercial product Acar'up (at a dilution of 10⁻⁶), or with compositions containing citral (at a dilution of 10⁻⁶), lavandulol (at a dilution of 10⁻⁶) and lavandulol and Tween 60 (both at a concentration of 0.5x10⁻⁶), as attracting agents, as a function of the exposure time to the attracting composition.

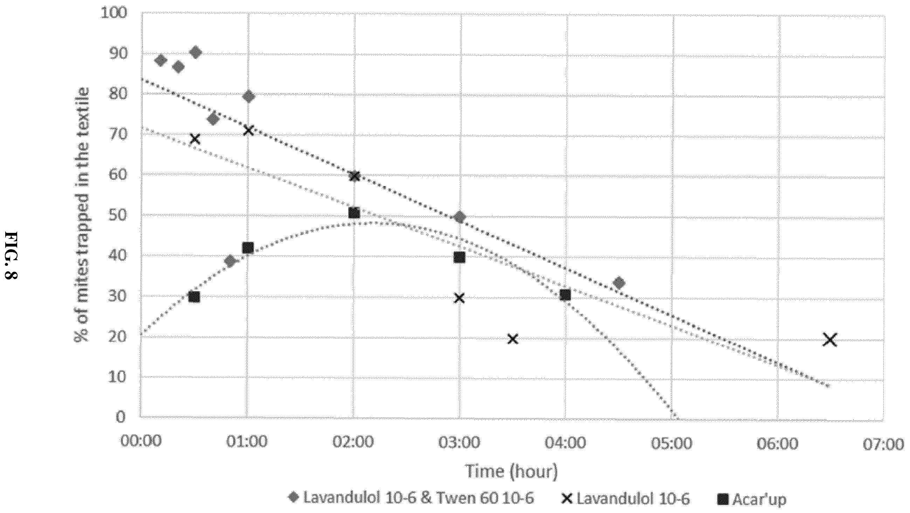

**Figure 8** is a graph representing the attracting efficiency of various compositions containing one or more attracting agents, as a function of time of application of the sheet on an object containing *Dermatophagoides farinae* mites. The graph represents the percentage of mites trapped by a fabric sprayed with compositions corresponding to the commercial product Acar'up (at a dilution of 10⁻⁶), or with compositions containing citral (at a dilution of 10⁻⁶), lavandulol (at a dilution of 10⁻⁶) and lavandulol and Tween 60 (both at a concentration of 0.5x10⁻⁶), as attracting agents, as a function of the exposure time to the attracting composition.

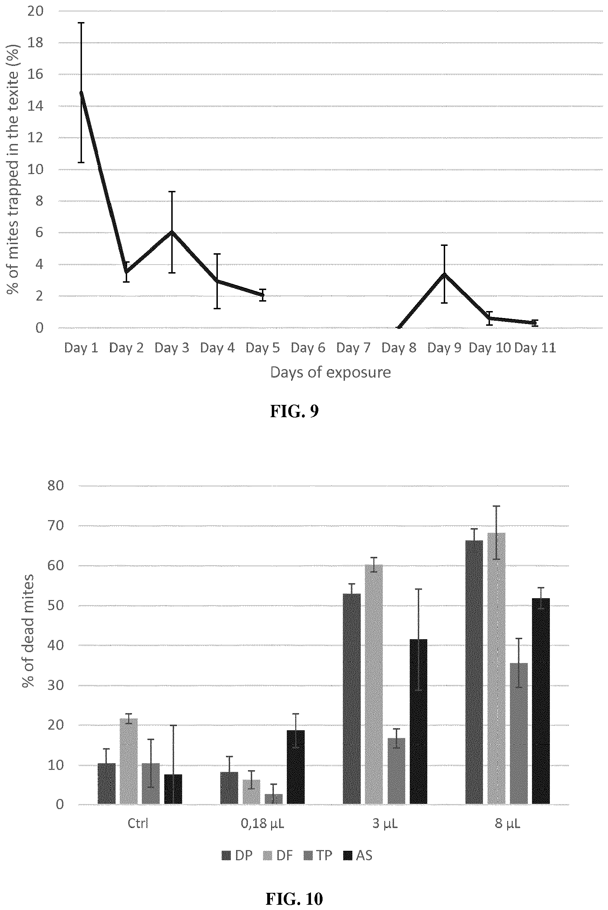

**Figure 9** is a graph representing the attracting efficiency of a 5 minutes time exposure of a composition comprising lavandulol diluted at 10⁻⁶. The graph represents the percentage of mites trapped by a fabric sprayed with compositions, as a function of the days of exposure to the attracting composition.
**Figure 10** is a set of graphs showing the percentage of dead mites after 24 hours of inhalation of lavandulol at different concentrations (0.18 µL, 3 µL or 8 µL of pure solution) or water (Ctrl). Four species of mites were tested: *Dermatophagoides pteronyssinus* (DP), *Dermatophagoides farinae* (DF), *Tyrophagus putrescentiae* (TP) and *Acarus siro* (AS).

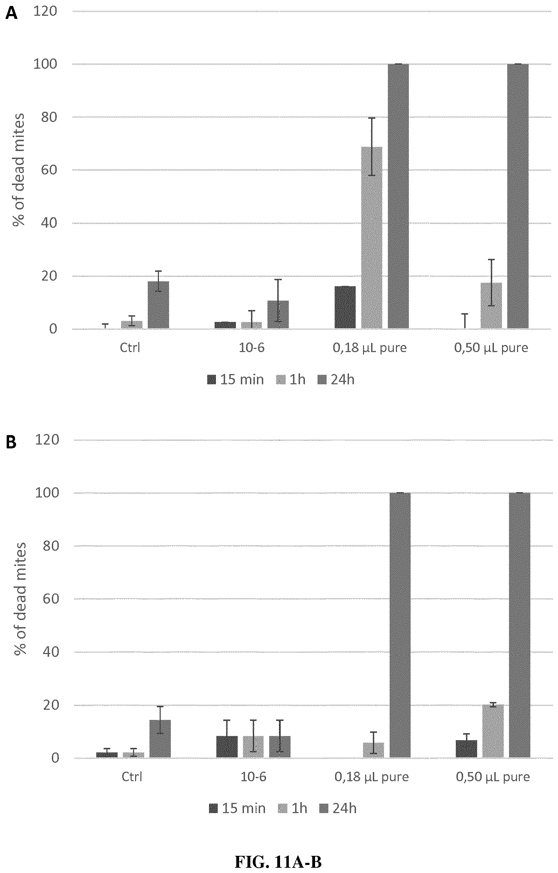

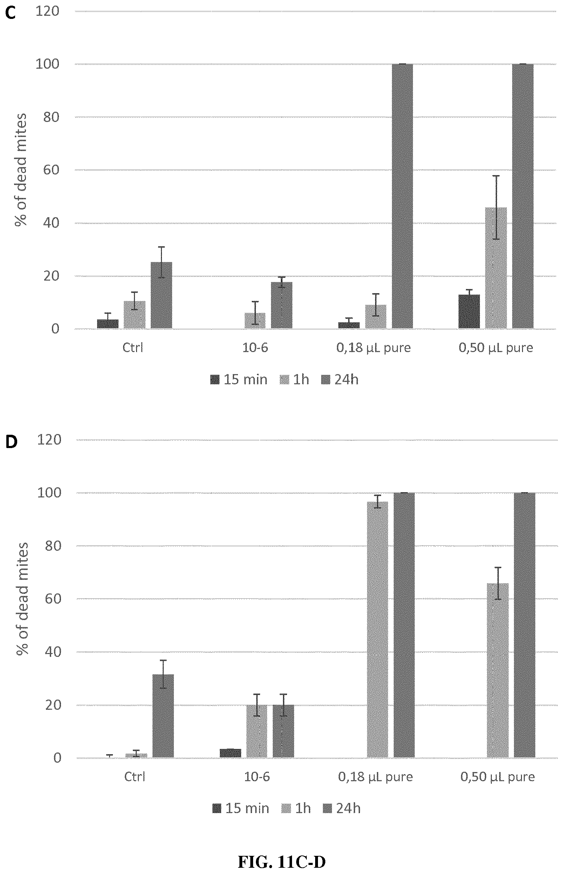

**Figure 11** is a set of graphs showing the percentage of dead mites after direct contact with different doses of lavandulol (at a dilution of 10⁻⁶, 0.18 µL of pure solution or 0.5 µL of pure solution) or water (Ctrl) for different time of exposure. Four species of mites were tested: *Dermatophagoides pteronyssinus* (A), *Dermatophagoides farinae* (B), *Tyrophagus putrescentiae* (C) and *Acarus siro* (D).

### EXAMPLES

The present invention is further illustrated by the following examples.

### Example 1: Physical and chemical factors affecting the choice of mites

Aim of the experiments: All experiments are tests of binary choice aiming to determine the preference of mites and the place where they prefer to stay (at least for 30 min). Rearing: The species studied was *Dermatophagoides pteronyssinus,* a dust mite common in mattresses in Eurasia. Mites are reared in Petri dishes and fed with human skin flakes (skin and whiskers obtained by cleaning electric shavers). All mites were reared together under defined conditions (20°C and 75% relative humidity). The experiments took place in a room kept at 20°C and 40% relative humidity.

Materials and methods: A group of mites (20 <n <40) was placed in the center of a Petri dish (ø = 5.5 cm) around which two semi-circles of felt were placed (see Figure 1). The pieces of felts were 70 mg/cm², their thickness was 2 mm. One felt is the control (control felt), for instance impregnated with water; the other felt is the felt with the tested item, for instance the felt that is impregnated with a chemical compound that is tested.

Mites move spontaneously towards one of the two felts. The number of mites that prefer to go to one side or another was counted and the distribution of these data was compared to a situation where mites have the choice between two identical pieces of felts (Kolmogorov-Smirnov tests).

Observations and counting of mites was made under binocular microscope (magnification 10x). The set-up is illuminated with a cold lamp (KL 1500 LCD, Schott ®), the lighting is symmetric and the light intensity was 50Klux. The experimental conditions were controlled in the room (T ° C: 19-22°C and RH 40%).

### Experiment 1

Aim of the experiment: Mites can choose between felts that are moistened differently.
Materials and methods: The control piece of felt was at 40% RH (20°C, the conditions of the laboratory). The tested felts were at 40, 75, 85 and 100% humidity. To obtain felts at 75 and 85% humidity, the felts were placed, for at least one hour, in a room containing a radio-electronic humidifier (Brown B500, accuracy ± 2 ° HR) humidifying the atmosphere at 75 and 85% respectively. The humidity of the room was regularly controlled with a thermohygrometer (Oregon). To obtain tested felts at 100% RH, felts were simply soaked in water.

Results: The mites were less attracted or repelled by a felt moistened at 40 and 75% (Table 1). When the felt was at 80% RH and 100%, it became repulsive for mites. The same results are obtained with *Dermatophagoides farinae.*

**Table 1: Influence of humidity on the choice of mites.**

| Tested felt that are at a defined HR % | Control felt | Nb of trials | stat Test | Mean | Standard deviation |
|---|---|---|---|---|---|
| felt at 100 %HR | felt at 40%HR | 30 | SD | 0.01 | 0.02 |
| felt at 85%HR | felt at 40%HR | 30 | SD | 0.35 | 0.13 |
| felt at 75%HR | felt at 40%HR | 30 | NS | 0.48 | 0.15 |
| felt at 40%HR | Felt at 40%HR | 30 | Control | 0.48 | 0.12 |

| | | | | | |
|---|---|---|---|---|---|
| *SD: Statistically different. NS: Non-statistically different.* | | | | | |

### Experiment 2

Aim of the experiments: Similar experiments were performed to determine the density of the felt preferred by mites.

Materials and methods: Mites choose between a felt of different density. All tested and control felts were impregnated with 1 µl of a solution comprising citral in a concentration of about 0.000096% (v/v). The solution used for testing the felt density was prepared as a 10⁻⁶ dilution from a 96% pure citral stock solution (Merck chemicals Ltd; catalog No. 802489).

Results. The felt that was more attracting for mites has a density of 20 mg/cm² (Table 2).

**Table 2: Influence of the density of the felt on the choice of mites.**

| Tested felt | Control felt | Nb of trials | Test stat | Mean | Standard deviation |
|---|---|---|---|---|---|
| Felt with density 20 mg/cm² | Felt with density 70 mg/cm² | 30 | SD | 0.63 | 0.17 |
| Felt with density 10 mg/cm² | Felt with density 20 mg/cm² | 30 | SD | 0.32 | 0.14 |

| | | | | | |
|---|---|---|---|---|---|
| *SD: Statistically different. NS: Non-statistically different.* | | | | | |

### Experiment 3:

Similar experimental set-ups were realized with colored felt and white felt.

**Table 3: Influence of the color of the felt and the color combined with the active compound.**

| Test | Tested felt | Control felt | Nb of trials | Test stat | Mean | Standard deviation |
|---|---|---|---|---|---|---|
| Color | dark blue felt | white felt | 30 | SD | 0.63 | 0.17 |
| compound and color | blue felt + 1 µl attracting agent (dil 10⁻⁶) | white felt + 1 µl H₂O | 18 | SD | 0.84 | 0.14 |

| | | | | | | |
|---|---|---|---|---|---|---|
| *SD: Statistically different. NS: Non-statistically different.* | | | | | | |

Results: The mites preferably migrated towards the blue felt. In combination with citral, a migration of 84% of the mites toward the blue felt was obtained.

### Example 2: Chemical factors influencing the efficiency of the trap

### Experiment 1:

Rearing: The species studied were *Dermatophagoides pteronyssinus* and *Dermatophagoides farinae,* house dust mite common in mattresses in Eurasia. Mites are reared in Petri dishes and fed with human skin flakes (skin and whiskers obtained by cleaning electric shavers). All mites were reared together under defined conditions (20°C and 75% relative humidity). The experiments took place in a room kept at 20°C and 40% relative humidity.

Aim of the experiments: The aim was to test the trap in condition similar to the conditions that will be met by the user of the trap.

Materials and methods: The mattresses were built at a smaller scale (15X reduction) than usual mattresses. These mini-mattresses are made in polyurethane and covered by a cover in cotton. They were infested with mites since at least 3 months. The fabric was a felt of 20 mg/cm² and is a rectangle of 10 cm x 20 cm. It was placed on the mini-mattress. Then the attracting solution was sprayed on the fabric with a spray bottle. The fabric was left in place on the mattress during one hour. During this time, the mites moved in the felt.

It is very difficult to count directly the mites hidden in the mattress and in the fabric. Therefore, we used a Berlèse funnel which is a device that is usually used to separate insects from litter. Here, it was used to separate the mites from their mattress or from the fabric. The Berlèse funnel uses a light bulb to heat and dry the mattress, thus driving the mites downwards through a screen and into a collecting jar containing some food and some water.

The principle is simple: Dust mites do not like light or excessive heat. They are attracted by a source of moisture and the smell of food. The mattress or blanket were therefore placed in the funnel (Figure 2). The mites went downwards in the direction of the jar, then in the jar. The harvest of the jar containing the mites took place after one day. Mites had then 24 hours to migrate to the jar collector.

As a substantial proportion of the population is immobile (moulting mites), trapping is less efficient than it would be otherwise and estimate of population size that is trapped are likely to be biased. To avoid this bias and make a proper assessment of the populations in infested mattresses, mattresses were carefully brushed with a soft brush at the end of the manipulation meaning that immobile mites and eggs also fall into the funnel. Fabric was carefully brushed too. The Berlèze funnel was rinsed with ethanol. Thus, mites still on the inner wall of the funnel were driven by ethanol in the jar collector.

At the end of the experiment, the jar contained: the food used as attracting to mites, a small amount of water also used for attracting, mites, and ethanol. The jar was emptied into a Petri dish and we counted mites under binocular. Counting of mites was made under binocular microscope (magnification 10X). The set-up is illuminated with a cold lamp (KL 1500 LCD, Schott ®).
The felt was sprayed with different attracting compositions: a solution of lavandulol, a solution of Tween 60, a combination of lavandulol and Tween 60, a solution of citral, and the attracting solution commercialized under the brand name Acar'up were compared at various dilutions.

Results: The results are displayed in Tables 4 and 5, and in figures 3 and 4.

**Table 4: Compared attraction capabilities of five attracting agents within several dilutions, with respect to Dermatophagoides pteronyssinus.**

| Dilution | Acar'up | Citral | Lavandulol | Tween 60 | Lavandulol + Tween 60 |
|---|---|---|---|---|---|
| Undiluted | 4% | 3% | 8% | 14% | 22% |
| 10⁻¹ | N/A | N/A | 34% | N/A | N/A |
| 10⁻² | 31% | N/A | N/A | N/A | N/A |
| 10⁻³ | 38% | 23% | 56% | 70% | 84% |
| 10⁻⁴ | 53% | N/A | N/A | N/A | N/A |
| 10⁻⁵ | 43% | N/A | 91% | N/A | N/A |
| 10⁻⁶ | 80% | 76% | 64% | 78% | 94%* |
| 10⁻⁷ | N/A | N/A | N/A | N/A | N/A |
| 10⁻⁸ | N/A | N/A | 46% | N/A | N/A |
| 10⁻⁹ | 54% | 56% | 55% | 57% | 68% |

| | | | | | |
|---|---|---|---|---|---|
| *N*/*A: Data non available;* **results were obtained with a mixture of a solution of lavandulol at a dilution 10⁻⁶ and of a solution of Tween 60 at a dilution of 10*^{-*6*}. *These results are represented in the graph of* *figure 3*. | | | | | |

*The diluted lavandulol solutions were prepared from a 95% pure lavandulol stock solution (Sigma-Aldrich, catalog No. 42583). The diluted Tween 60 solutions were prepared from an about 100% pure Tween 60 stock solution (Merck Chemicals Ltd., catalog No. 822186).*

**Table 5: Compared attraction capabilities of five attracting agents within several dilutions, with respect to Dermatophagoides farinae.**

| Dilution | Acar'up | Citral | Lavandulol | Tween 60 | Lavandulol + Tween 60 |
|---|---|---|---|---|---|
| Undiluted | 5% | 5% | 6% | 7% | 12% |
| 10⁻¹ | N/A | 49% | N/A | N/A | N/A |
| 10⁻² | 31% | N/A | N/A | N/A | N/A |
| 10⁻³ | 42% | 36% | 57% | 54% | 67% |
| 10⁻⁴ | 55% | N/A | N/A | N/A | N/A |
| 10⁻⁵ | N/A | N/A | 90% | N/A | N/A |
| 10⁻⁶ | 55% | 48% | 71% | 81% | 95%* |
| 10⁻⁷ | N/A | N/A | N/A | N/A | N/A |
| 10⁻⁸ | N/A | N/A | 37% | N/A | N/A |
| 10⁻⁹ | 39% | 43% | 28% | 39% | 54% |

| | | | | | |
|---|---|---|---|---|---|
| *N*/*A: Data non available; *results were obtained with a mixture of a solution of lavandulol at a dilution 10⁻⁶ and of a solution of Tween 60 at a dilution of 10*^{-*6*}. *These results are represented in the graph of* *figure 4**.* *The diluted lavandulol solutions were prepared from a 95% pure lavandulol stock solution (Sigma-Aldrich, catalog No. 42583). The diluted Tween 60 solutions were prepared from a 100% pure Tween 60 stock solution (Merck Chemicals Ltd., catalog No. 822186).* | | | | | |

According to these results, it appears that the most efficient attracting solutions are those comprising lavandulol and/or Tween 60, for both species of acarids.

### Experiment 2:

Similar conditions have been used for evaluating the influence of several different drying times of the mattress (from 0 hour up to 7 hours), such as to determine whether the drying time had an influence over mites attraction by the fabric that was impregnated with an attracting solution containing one or more attracting agents.

Results: The corresponding results are displayed in figures 5 and 6.

### Experiment 3:

Similar conditions have been used for evaluating the influence of the exposure time, meaning the period of time during the fabric is placed on the mattress, such as to determine whether the exposure time had an influence over mites attraction by the fabric that was impregnated with an attracting solution containing one or more attracting agents, and also to determine whether the nature of the attracting agent had an influence on the required exposure time. Several different exposure times were tested (from 0 hour up to 7 hours), after having dried the mattress for 2 hours.

Results: The corresponding results are displayed in figures 7 and 8. The fabric sprayed with the compositions of the invention (i.e. containing lavandulol and/or Tween 60) appear more efficient when placed on the mattress than the compositions of the prior art.
Further, as could be seen from figures 7 and 8, compositions containing lavandulol and/or Tween 60 as attracting agents are most efficient as from the spraying.

### Experiment 4:

Similar experiments were performed to determine attractiveness of mites when an attracting solution comprising one or more attractive agents is exposed during a short time without drying time.

Results: The corresponding results are displayed in figure 9. From the first day of treatment with the attracting solution during 5 minutes, the percentage of mites attracted in the sheet is very high, indicating that this short time is sufficient for mites to migrate towards the sheet. At the second day, the percentage of mites attracted in the sheet is greatly reduced and continues to decrease the following days (from around 15% to around 0%), indicating a decreasing in mites' population in mattresses.
Therefore, compositions of the invention may also be used during a short exposure time for several consecutive days.

### Example 3: felt compositions influencing the efficiency of the trap

Aim of the experiments: Similar experiments were performed to determine the composition of the felt preferred by mites.

Materials and methods: Mites were allowed to choose between felts having different compositions. All tested and control felts were impregnated with 1 µl of a solution comprising Lavandulol (at a final dilution of 0.5x10⁻⁶) and Tween 60 (at a final dilution of 0.5x10⁻⁶) (see below).

Results. The corresponding results are displayed in Table 6. The felt that was more attracting for mites was made of plain cotton.

**Table 6: Compared attraction capabilities of seven felt compositions**

| | solution/200cm² | drying + exposure time | Attracting compounds | Dilution of lavandulol or Tween 60 | Nb of trials | trapped living mites |
|---|---|---|---|---|---|---|
| 100 % polyester | 2ml | 2h+2h | Lavandulol + Tween 60 | 0.5x10⁻⁶ | 2 | 18% |
| 70% viscose/30% wool | 2ml | 2h+2h | Lavandulol + Tween 60 | 0.5x10⁻⁶ | 2 | 21% |
| 30% viscose/70% wool | 2ml | 2h+2h | Lavandulol + Tween 60 | 0.5x10⁻⁶ | 2 | 49% |
| 100% wool | 2ml | 2h+2h | Lavandulol + Tween 60 | 0.5x10⁻⁶ | 2 | 69% |
| 70% viscose/30% coton | 2ml | 2h+2h | Lavandulol + Tween 60 | 0.5x10⁻⁶ | 2 | 55% |
| 30% viscose/70% coton | 2ml | 2h+2h | Lavandulol + Tween 60 | 0.5x10⁻⁶ | 2 | 70% |
| 100% coton | 2ml | 2h+2h | Lavandulol + Tween 60 | 0.5x10⁻⁶ | 2 | 95% |

| | | | | | | |
|---|---|---|---|---|---|---|
| *The diluted lavandulol solutions were prepared from a 95% pure lavandulol stock solution (Sigma-Aldrich, catalog No. 42583). The diluted Tween 60 solutions were prepared from a 100% pure Tween 60 stock solution (Merck Chemicals Ltd., catalog No. 822186).* | | | | | | |

### Example 4: Elimination of the mites from the sheet

When the dust mites are in the fabric, to eliminate mites, the fabric is then placed in the washing machine. All mites were killed by water temperatures 55°C or greater (in correlation with the results obtained by Mc Donald & Tovey 1992, Andersen & Roesen 1998). According to other authors, it is possible to achieve mite control in delicate garments by washing at low temperature in the presence of a mite control additive providing a final concentration of 0.03% benzyl benzoate (Bischoff et al 1998). After washing, when the fabric is dry, it can again be placed on another places with living mites, the fabric can be impregnated with the attracting solution by means of the disperser device and can be used once again to trap dust mites (Colloff 2009).

It is also possible to kill the mites in the fabric by killing them in a freezer. A temperature of -20°C for 30 min achieved almost 100% mortality, indicating that a standard domestic freezer could be used for killing mites in relatively small items such as soft toys, pillows and items of clothing that cannot be hot washed. After the passage in the freezer, the user must shake the fabric to get rid of the dead dust mites (results in accordance with Colloff 2009).

### Example 5: Analysis of the attractiveness of attractive solutions on stored food mites

### Material and methods:

A group of mites (20 < n < 40) was placed in the center of a Petri dish (diameter = 5.5 cm) around which two felt pieces (density of 70 mg/cm², thickness of 2 mm) were placed equidistant. The first felt piece was impregnated with water and the other felt piece was impregnated with the lavandulol composition at different dilutions. The diluted lavandulol solutions were prepared from a 90-95% pure lavandulol stock solution (Phytolab, catalog No. 80887).

Mites moved spontaneously towards one of the two felt pieces. The number of mites migrating to one side or to the other side was counted and this distribution was compared to a situation where mites were placed in a Petri dish containing two felt pieces impregnated with water.
Observations, counting, and identification of mites' species were performed under binocular microscope (magnification 10x). The set-up is illuminated with a cold lamp (KL 1500 LCD, Schott ®), the lighting is symmetric and the light intensity was 50Klux. The experimental conditions were controlled in the room (T°C: 19-22°C and RH 40%). Results: The corresponding results are displayed in Tables 7 and 8.

**Table 7: Attractiveness efficiency of attractants in different concentrations on the stored food mite species Tyrophagus putrescentiae.**

| Dilution | Number of mites on the felt piece impregnated with the lavandulol composition |
|---|---|
| Undiluted | 2% |
| 10⁻³ | 34% |
| 10⁻⁶ | 44% |
| 10⁻⁷ | 48% |
| 10⁻⁹ | 38% |
| 10⁻¹² | 47% |
| 10⁻¹³ | 49% |
| 10⁻¹⁴ | 69% |
| 10⁻¹¹ | 63% |
| 10⁻¹⁶ | 60% |

**Table 8: Attractiveness efficiency of attractants in different concentrations on the stored food mite species Acarus siro.**

| Dilution | Number of mites on the felt piece impregnated with the lavandulol composition |
|---|---|
| Undiluted | 1,1% |
| 10⁻³ | 44% |
| 10⁻⁶ | 48% |
| 10⁻⁹ | 40% |
| 10⁻¹² | 55% |
| 10⁻¹⁴ | 54% |
| 10⁻¹⁶ | 50% |

According to the results, it appears that the lavandulol attractive solution efficiently attracts mites when at least at a dilution of 10⁻³, and even more at least at a dilution of 10⁻⁶. On the contrary, an undiluted solution of lavandulol fails to attract mites.

These results also show that the composition of the invention attracts stored food mites.

### Example 6: Analysis of the attractiveness of attractive solutions on dog's basket mites

### Material and methods:

Seven baskets of dogs with atopic dermatitis were tested for the attractive solution of the invention. First, removable blankets or pillows have been removed of dog's baskets and washed in a washing machine at 60°C. Baskets were then aerated for 5 hours. Sheets of the invention were placed on the baskets and the attractant solution at a dilution of 10⁻⁶ was sprayed on it at 2 applications per square.

After 2 hours, baskets and sheets were vacuumed separately, each with a vacuum in which a nylon filter was inserted into a collector attached to the vacuum tube (Sheet 1 and Basket 1). Filters were then each transferred in a Petri dish to count the number of mites on sheets and on baskets. The experimental conditions were controlled in the room (T°C: 19-22°C and RH 40%).

This procedure (basket aeration, sheet vaporization and basket vacuuming) was repeated after one week (Sheet 2 and Basket 2), and after two weeks (Sheet 3 and Basket 3).

Results: The corresponding results are displayed in Tables 9 to 11.

**Table 9: Average number of mites in the sheets (after vaporization of attractive solution) or in the baskets, after one utilization (sheet 1 and basket 1), two utilizations (sheet 2 and basket 2) and 3 utilizations (sheet 3 and basket 3).**

| | Number of samples | Average number of mites | Standard deviation |
|---|---|---|---|
| Sheet 1 | 4 | 24 | 11,9 |
| Sheet 2 | 5 | 7 | 4,8 |
| Sheet 3 | 4 | 21 | 24,1 |
| Basket 1 | 7 | 3 | 6,9 |
| Basket 2 | 6 | 4 | 7,3 |
| Basket 3 | 5 | 3 | 4,5 |

**Table 10: Efficiency of attractive solution after each utilization.**

| | Percentage of mites removed from the basket | Average percentage of mites removed from the basket |
|---|---|---|
| First utilization (S1 versus S1+B1) | 91 | 81 |
| Second utilization (S2 versus S2+B2) | 64 | |
| Third utilization (S3 versus S3+B3) | 88 | |

**Table 11: Identification of mites found in sheets or dog's baskets.**

| Taxonomy | Cheylitidae | Dermatophagoides sp. | Tyrophagus sp. | Acaridae |
|---|---|---|---|---|
| Basket | 0% | 12% | 7% | 1% |
| Sheet | 1% | 25% | 48% | 5% |

These results show that the composition of the invention is efficient to remove mites from animals' baskets, such as dogs' baskets, with an efficacy between 64 and 91% (Tables 9 and 10).

Among mites found in dogs' baskets, dust mites (*Dermatophagoides sp*.) and stored food mites *(Tyrophagus sp.* And Acaridae) have been identified (Table 11). Therefore, the attractive solution attracts house dust mites as well as stored food mites.

Moreover, some of the dogs have seen the symptoms of atopic dermatitis significantly reduced after only three utilizations of the composition of the invention.

### Example 7: Analysis of the toxicity of the attractive compounds

### Material and methods:

The species studied were two species of dust common in mattresses in Eurasia *(Dermatophagoides pteronyssinus* and *Dermatophagoides farinae),* and two species of stored food mites common in Eurasia *(Tyrophagus putrescentiae* and *Acarus siro).* These four species were reared under defined conditions (20°C and 75% relative humidity). The house dust mites were fed with human flakes (skin and whiskers obtained by cleaning electric shavers) and stored food mites were fed with fish food. The experiments were performed at 20°C and 40% relative humidity.

### Experiment 1: indirect contact

For each of the four species, a group of a mites (10 < n < 25) was placed in a Petri dish (diameter = 5.5 cm). This dish was then recovered by a filter paper that enabled gasexchange and placed into another dish (diameter = 9 cm), in which was placed a piece of paper filter (5x1 cm) impregnated with lavandulol at various concentration (0.18 µL, 3 µL or 8 µL of pure solution, corresponding respectively to 0.15 mg, 2.5 mg or 6.67 mg of lavandulol), or with water. The bigger of the two dishes was then covered.

After 24 hours, the number of dead mites were counted. The death of a mite was determined by reaction to a stimulation with a needle: lack of reaction and the persistence of immobility indicated death. This experiment was repeated three times with the four species.

Observations and counting of mites were made under binocular microscope (magnification 10x). The set-up is illuminated with a cold lamp (KL 1500 LCD, Schott ®), the lighting is symmetric and the light intensity was 50Klux. The experimental conditions were controlled in the room (T°C: 19-22°C and RH 40%).

Results: The corresponding results are displayed in Figure 10.

Pure lavandulol volumes of 3 µL and 8 µL cause high mortality for all species. On the contrary, lavandulol volume of 0.18 µL is not lethal for mites (Figure 10). Therefore, at this dosage and below, lavandulol is not acaricidal by inhalation.

### Experiment 2: direct contact

For this experiment, for each of the four species, a group of mites (10 < n < 25) was placed in a Petri dish in direct contact with the substance to test. To directly contact mites with the substance, a piece of paper filter (5x1 cm) impregnated with lavandulol at various concentration (10 µL of a 10⁻⁶ dilution, 0.18 µL of pure solution and 0.5 µL of pure solution, corresponding respectively to 8.8 ng, 0.15 mg or 0.417 mg of lavandulol), or with a neutral solution, was placed in the Petri dish. The dish was then closed with Parafilm®.

After a determined time (15 min, 1 hour or 24 hours), the number of dead mites were counted as previously described.

Results: The corresponding results are displayed in Figure 11.

According to these results, it appears that the composition comprising lavandulol at a 10⁻⁶ dilution doesn't cause death of mites by indirect contact, for all species (Figure 11A-D).
By contrast, pure solutions (0.18 µL and 0.5 µL) lead to mites' death after only 1 hour, all mites being died after 24 hours (Figure 11A-C), except for the species *Acarus siro* for which 97% of mites died after only 1 hour (Figure 11D).

Taken together, results of experiments 1 and 2 demonstrate that at the concentration of the invention, the composition comprising lavandulol according to the invention attracts acarids but does not kill them.

### References

- Colloff "Dust mites", CSIRO Entomology, 2009, ISBN 9780643065895.
- Sonenshine D.E., 1985 « Pheromones and other semiochemicals of the acari » Annual Reviews. 30 : 1-28.
- Mc Donald L. G., Tovey E. 1992. The role of water temperature and laundry procedures in reducing house dust mite populations and allergen content of bedding. Journal of Allergy and Clinical Immunology Vol. 90, 599-608.
- Andersen A. & Roesen J. 1998. House dust mite, Dermatophagoides pteronyssinus, and its allergens: effects of washing.
- Bischoff, Fischer, Liebenberg, Kniest. 1998. Mite control with low temperature washing-II Elimination of living mites on clothing. Clinical and Experimental allergy, vol 28, 60-65.

## Claims

1. Use of a composition comprising an attracting agent, wherein said attracting agent is lavandulol in a concentration of from 0.0000001% (v/v) to 0.0095% (v/v) for attracting mites.

2. The use according to claim 1, wherein said composition further comprises at least one additional attracting agent, wherein said additional attracting agent is a polysorbate in a concentration of from 0.0000001% (v/v) to 0.01% (v/v).

3. The use according to any one of claims 1 or 2, wherein said composition further comprises at least one solvent, at least one stabilizer, at least one emulsifier, at least one excipient and/or at least one perfume.

4. The use according to claim 3, wherein said at least one perfume is selected in the group consisting of essential oils of *Mentha citrata, Mentha piperita, Mentha arvensis, Eucalyptol radiata, Vanilla planifolia and Vanilla odorata.*

5. The use according to anyone of claims 1 to 4, wherein said mites are selected from the group consisting of *Dermatophagoides pteronyssinus and Dermatophagoides farinae.*

6. A method for attracting and holding mites, comprising the steps of:
a) providing a sheet having a thickness of at least 1 mm and having interstices sufficiently large to hold mites, wherein a sheet having interstices sufficiently large to hold mites is defined as a sheet having pore sizes from less than 1 mm up to 5 mm; and
b) applying on said sheet the composition as defined in any one of claims 1 to 5 at a dose ranging from 5 mL/m² to 2000 mL/m².

7. The method according to claim 6 further comprising the steps of contacting said sheet before step a) or after step b) with an object, wherein said sheet is not put directly on a human or on an animal.

8. The method according to claim 7, wherein said sheet is contacted with an object for up to 3 hours, after step b).

9. The method according to claim 7 or 8, wherein said sheet is contacted with an object for up to 2 hours after step b).

10. A method for eliminating mites, comprising the steps of:
i) performing the method according to any one of claims 7 to 9; and
ii) removing said sheet from said object,

11. A sheet for attracting mites having a thickness of at least 1 mm and having interstices sufficiently large to hold mites, wherein a sheet having interstices sufficiently large to hold mites is defined as a sheet having pore sizes from less than 1 mm up to 5 mm, comprising a composition comprising an attracting agent, wherein said attracting agent is lavandulol in a concentration of from 0.0000001% (v/v) to 0.0095% (v/v) for attracting mites at a dose ranging from 5 mL/m² to 2000 mL/m².

12. The sheet according to claim 11, wherein said sheet comprises from 0 to 100% polyester or comprises at least 30 % to 100 % of wool and/or cotton and from 0 % to 70 % viscose and/or polyester.

13. A kit for attracting mites comprising a composition comprising an attracting agent, wherein said attracting agent is lavandulol in a concentration of from 0.0000001% (v/v) to 0.0095% (v/v) and a sheet having a thickness of at least 1 mm and having interstices sufficiently large to hold mites, wherein a sheet having interstices sufficiently large to hold mites is defined as a sheet having pore sizes from less than 1 mm up to 5 mm.

14. Use of a unit dosage applicator for attracting mites comprising a composition according to any one of claims 1 to 5, adapted to release an area dose ranging from 5 mL/m² to 2000 mL/m².

15. Use of lavandulol in a concentration of from 0.0000001% (v/v) to 0.0095% (v/v) and/or of at least one polysorbate in a concentration of from 0.0000001% (v/v) to 0.01% (v/v) for attracting mites, wherein said mites are selected from the group consisting of *Dermatophagoides pteronyssinus, Dermatophagoides farinae, Tyrophagus putrescentiae and Acarus Siro* and wherein the polysorbate is one of the list consisting of sorbitan monolaurate, sorbitan monopalmitate, polyethylene glycol sorbitan monostearate, polyoxyethylene 20 sorbitan monooleate, polyoxyethylene 4 sorbitan monostearate, polyoxyethylene 20 sorbitan tristearate, sorbitan tristearate, sorbitan monooleate and polyoxyethylene sorbitan trioleate.

## Patentansprüche

1. Verwendung einer Zusammensetzung, umfassend ein Anziehungsmittel, wobei das genannte Anziehungsmittel Lavandulol in einer Konzentration von 0,0000001 % (v/v) bis 0,0095 % (v/v) zum Anziehen von Milben ist.

2. Verwendung gemäß Anspruch 1, wobei die genannte Zusammensetzung weiterhin wenigstens ein zusätzliches Anziehungsmittel umfasst, wobei das genannte zusätzliche Anziehungsmittel ein Polysorbat in einer Konzentration von 0,0000001 % (v/v) bis 0,01 % (v/v) ist.

3. Verwendung gemäß irgendeinem der Ansprüche 1 oder 2, wobei die genannte Zusammensetzung weiterhin wenigstens ein Lösungsmittel, wenigstens einen Stabilisator, wenigstens einen Emulgator, wenigstens einen Hilfsstoff und / oder wenigstens einen Duftstoff umfasst.

4. Verwendung gemäß Anspruch 3, wobei der wenigstens eine Duftstoff aus der Gruppe ausgewählt ist, bestehend aus ätherischen Ölen aus *Mentha citrata, Mentha piperita, Mentha arvensis, Eucalyptol radiata, Vanilla planifolia und Vanilla odorata.*

5. Verwendung gemäß irgendeinem der Ansprüche 1 bis 4, wobei die genannten Milben ausgewählt sind aus der Gruppe bestehend aus *Dermatophagoides pteronyssinus und Dermatophagoides farinae.*

6. Verfahren zum Anziehen und Festhalten von Milben, umfassend die Schritte:
a) Bereitstellen eines Blatts mit einer Dicke von wenigstens 1 mm und mit Zwischenräumen, die breit genug sind, um Milben festzuhalten, wobei ein Blatt, das ausreichend breite Zwischenräume zum Festhalten von Milben aufweist, als ein Blatt mit Porengrößen von weniger als 1 mm bis zu 5 mm definiert ist; und
b) Anwenden der Zusammensetzung gemäß Definition in irgendeinem der Ansprüche 1 bis 5 in einer von 5 ml/m² bis 2000 ml/m² reichenden Dosis auf das genannte Blatt.

7. Verfahren gemäß Anspruch 6, weiterhin umfassend die Schritte des Kontaktierens des genannten Blattes vor Schritt a) oder nach Schritt b) mit einem Gegenstand, wobei das genannte Blatt nicht direkt auf einen Menschen oder ein Tier gelegt wird.

8. Verfahren gemäß Anspruch 7, wobei das genannte Blatt nach Schritt b) über bis zu 3 Stunden mit einem Gegenstand kontaktiert wird.

9. Verfahren gemäß Anspruch 7 oder 8, wobei das genannte Blatt nach Schritt b) über bis zu 2 Stunden mit einem Gegenstand kontaktiert wird.

10. Verfahren zum Beseitigen von Milben, umfassend die Schritte:
i) Durchführen des Verfahrens gemäß irgendeinem der Ansprüche 7 bis 9; und
ii) Entfernen des genannten Blattes von dem genannten Gegenstand.

11. Blatt zum Anziehen von Milben, das eine Dicke von wenigstens 1 mm aufweist und Zwischenräume aufweist, die zum Festhalten von Milben ausreichend breit sind, wobei ein Blatt, das Zwischenräume aufweist, die ausreichend dick sind, um Milben festzuhalten, als ein Blatt mit Porengrößen von weniger als 1 mm bis zu 5 mm definiert ist, umfassend eine Zusammensetzung, umfassend ein Anziehungsmittel, wobei das genannte Anziehungsmittel Lavandulol in einer Konzentration von 0,0000001 % (v/v) bis 0,0095 % (v/v) zum Anziehen von Milben in einer von 5 ml/m² bis 2000 ml/m² reichenden Dosis ist.

12. Blatt gemäß Anspruch 11, wobei das genannte Blatt von 0 bis 100 % Polyester umfasst oder wenigstens 30 % bis 100 % Wolle und / oder Baumwolle und von 0 % bis 70 % Viskose und / oder Polyester umfasst.

13. Kit zum Anziehen von Milben, umfassend eine Zusammensetzung, umfassend ein Anziehungsmittel, wobei das genannte Anziehungsmittel Lavandulol in einer Konzentration von 0,0000001 % (v/v) bis 0,0095 % (v/v) ist, und ein Blatt, das eine Dicke von wenigstens 1 mm aufweist und Zwischenräume aufweist, die ausreichend breit zum Festhalten von Milben sind, wobei ein Blatt mit ausreichend breiten Zwischenräumen zum Festhalten von Milben als ein Blatt definiert ist, das Porengrößen von weniger als 1 mm bis zu 5 mm aufweist.

14. Verwendung eines Einheitsdosierungs-Applikators zum Anziehen von Milben, umfassend eine Zusammensetzung gemäß irgendeinem der Ansprüche 1 bis 5, die zum Freigeben eines von 5 ml/m² bis 2000 ml/m² reichenden Dosisbereichs geeignet ist.

15. Verwendung von Lavandulol in einer Konzentration von 0,0000001 % (v/v) bis 0,0095% (v/v) und/ oder wenigstens einem Polysorbat in einer Konzentration von 0,0000001 % (v/v) bis 0,01 % (v/v) zum Anziehen von Milben, wobei die genannten Milben aus der Gruppe ausgewählt sind, bestehend aus *Dermatophagoides pteronyssinus, Dermatophagoides farinae, Tyrophagus putrescentiae und Arcus Siro* und wobei das Polysorbat eines aus der Liste ist, bestehend aus Sorbitan-Monolaurat, Sorbitan-Monopalmitat, Polyethylenglykol-Sorbitanmonostearat, Polyoxyethylen-20-Sorbitanmonooleat, Polyoxyethylen-4-Sorbitanmonostearat, Polyethylen-20-Sorbitantristearat, Sorbitan-Tristearat, Sorbitan-Monooleat und Polyoxyethylen-Sorbitantrioleat.

## Revendications

1. Utilisation d'une composition comprenant un agent attractif, dans laquelle ledit agent attractif est du lavanduol dans une concentration de 0,000001% (v/v) à 0,0095% (v/v) pour attirer les acariens.

2. Utilisation selon la revendication 1, pour laquelle ladite composition comprend également au moins un agent attractif supplémentaire, pour laquelle ledit agent attractif supplémentaire est un polysorbate dans une concentration de 0,000001% (v/v) à 0,01% (v/v).

3. Utilisation selon l'une des revendications 1 ou 2, pour laquelle ladite composition comprend également au moins un solvant, au moins un stabilisateur, au moins un émulsifiant, au moins un excipient et/ou au moins un parfum.

4. Utilisation selon la revendication 3, pour laquelle ledit au moins un parfum est sélectionné dans le groupe d'huiles essentielles *Mentha citrata, Mentha piperita, Mentha arvensis, Eucalyptus radiata, Vanille planifolia et Vanille odorata.*

5. Utilisation selon l'une des revendications 1 à 4, pour laquelle lesdits acariens sont sélectionnés parmi le groupe composé *Dermatopharoides pteronyssinus et Dermatopharoides farinae.*

6. Une méthode consistant à attirer et piéger les acariens, comprenant les étapes de :
a) Fournir une feuille d'une épaisseur d'au moins 1 mm et ayant des interstices suffisamment grands pour contenir les acariens, pour laquelle une feuille ayant des interstices suffisamment grands pour contenir les acariens est définie comme une feuille dont la taille des pores est inférieure à 1 mm jusqu'à 5 mm ;
b) Appliquer sur ladite feuille la composition telle que définie dans l'une des revendications 1 à 5 à une dose allant de 5 ml/m² à 2000 mL/m².

7. La méthode selon la revendication 6, comprenant également les étapes de mise en contact de ladite feuille avant l'étape a) ou après l'étape b) avec un objet, selon laquelle ladite feuille n'est pas mise directement en contact sur un humain ou sur un animal.

8. La méthode selon la revendication 7, selon laquelle ladite feuille est en contact avec un objet jusqu'à 3 heures, après l'étape b).

9. La méthode selon les revendications 7 ou 8, selon laquelle ladite feuille est en contact avec un objet jusqu'à 2 heures après l'étape b).

10. Méthode d'élimination des acariens, comprenant les étapes de :
i) On exécute la méthode selon l'une des revendications 7 à 9;
ii) On enlève ladite feuille de l'objet.

11. Une feuille pour attirer les acariens ayant une épaisseur d'au moins 1 mm et ayant des interstices suffisamment grands pour contenir les acariens, pour laquelle une feuille ayant des interstices suffisamment grands pour contenir les acariens est définie comme une feuille ayant des tailles de pores de moins de 1 mm jusqu'à 5 mm, comprenant une composition comprenant un agent attractif, dans laquelle ledit agent attractif est le lavanduol dans une concentration de 0.0000001% (v/v) à 0.0095% (v/v) pour attirer les acariens à une dose allant de 5 ml/m² à 2000 mL/m².

12. La feuille selon la revendication 11, pour laquelle ladite feuille comprend de 0 à 100% polyester ou comprend au moins 30 % à 100 % de laine et/ou de coton et de 0 % à 70 % de viscose et/ou de polyester.

13. Un kit pour attirer les acariens comprenant une composition comprenant un agent attractif, dans laquelle l'agent attractif est le lavandulol dans une concentration de 0,000001% (v/v) à 0,0095% (v/v) et une feuille ayant une épaisseur de au moins 1 mm et ayant des interstices suffisamment grands pour contenir les acariens, pour laquelle une feuille ayant des interstices suffisamment grands pour contenir les acariens est définie comme une feuille ayant des tailles de pores de moins de 1 mm à 5 mm.

14. Utilisation d'un applicateur de dosage unitaire pour attirer les acariens comprenant une composition selon l'une des revendications 1 à 5, adapté pour libérer une dose surfacique allant de 5 ml/m² à 2000 mL/m².

15. Utilisation du lavandulol dans une concentration de 0,000001% (v/v) à 0. 0095% (v/v) et/ou d'au moins un polysorbate dans une concentration de 0,0000001% (v/v) à 0,01% (v/v) pour attirer les acariens, pour laquelle les acariens sont sélectionnés dans le groupe composé des *Dermato Phagageides pteronyssinus, Dermatophagoides farinae, Tyrophagus putrescentiae* et *Acarus Siro* et pour laquelle le polysorbate est un composé de la liste suivante : monolaurate sorbitan, monopalmitate sorbitan , polyéthylène glycol sorbitan monostearate, polyoxyéthylène 20 sorbitan monooléate sorbitan, polyoxyéthylène 4 sorbitan monostearate, polyoxyéthylène 20 sorbitan trestearate, sorbitan trestearate, sorbitan monooleate et polyoxyéthylène sorbitan trioleate.
